# EUROPÄISCHE PATENTSCHRIFT

(11) **EP 4 126 707 B1**
(45) Veröffentlichungstag und Bekanntmachung des Hinweises auf die Patenterteilung: **12.03.2025**
(21) Anmeldenummer: 21712797.6
(22) Anmeldetag: 16.03.2021
(51) Int. Cl.: B65G 1/04, B25J 18/00

(54) **LOGISTIKSYSTEM**
LOGISTICS SYSTEM
SYSTÈME LOGISTIQUE

(30) Priorität: 01.04.2020 DE 102020204272
(43) Veröffentlichungstag der Anmeldung: 08.02.2023
(73) Patentinhaber: KUKA Deutschland GmbH, 86165 Augsburg (DE)
(72) Erfinder: RUEHR, Thomas, 91052 Erlangen (DE)
(74) Vertreter: Oelke, Jochen
(86) Internationale Anmeldenummer: PCT/EP2021/056627
(87) Internationale Veröffentlichungsnummer: WO 2021/197833

(56) Entgegenhaltungen:
- WO-A2-2008/091733
- CN-U- 207 784 804
- DE-A1- 102004 024 077
- DE-A1- 3 941 754
- DE-B3- 102016 222 255

## Beschreibung

Die Erfindung betrifft ein Logistiksystem, aufweisend ein erstes Regallager und wenigstens ein weiteres Regallager, sowie mindestens einen Roboterarm mit mehreren Gliedern und die Glieder gegeneinander automatisch verstellbar verbindenden Gelenken, wobei eines der Glieder ein basisbildendes Grundglied des Roboterarms ist. Das erfindungsgemäße Logistiksystem kann insbesondere zum automatisierten Betreiben eines Gewächshauses ausgebildet sein. Ein derartiges Gewächshaus kann zum Erzeugen von Nahrungsmitteln eingerichtet sein, insbesondere in Form der sogenannten "Vertikalen Landwirtschaft" (Vertical Farming).

Die WO 2019/109006 A1 beschreibt ein System zur Produktion landwirtschaftlicher Nahrungsmittel in Gebäuden mit mehreren Stockwerken.

Die DE 39 41 754 A1 umfasst die Merkmale des Oberbegriffs des Anspruchs 1 und offenbart eine Vorrichtung zum Ein- und Auslagern von Ladeeinheiten in einem Regallager, wobei jede Regalzeile des Regallagers mit einer horizontal verlaufenden Schiene ausgestattet ist. An dieser Schiene ist ein Förderer verfahrbar angeordnet ist, wobei der Förderer als Lastaufnahmemittel einen Roboter aufweisen kann.

Aufgabe der Erfindung ist es, ein Logistiksystem zu schaffen, das ein Umsetzen und/oder Versorgen von Waren innerhalb einzelner Regallager besonders wirtschaftlich, insbesondere unter geringem Personalbedarf mit hoher Effizienz ermöglicht. Im Speziellen ist es Aufgabe der Erfindung ein Logistiksystem zu schaffen, das ein Umsetzen und/oder Versorgen von Pflanzen, insbesondere im Rahmen der Produktion landwirtschaftlicher Nahrungsmittel in Gebäuden besonders wirtschaftlich, insbesondere unter geringem Personalbedarf mit hoher Effizienz ermöglicht.

Die Aufgabe wird erfindungsgemäß gelöst durch ein Logistiksystem, aufweisend ein erstes Regallager und wenigstens ein weiteres Regallager, sowie mindestens einen Roboterarm mit mehreren Gliedern und die Glieder gegeneinander automatisch verstellbar verbindenden Gelenken, wobei eines der Glieder ein basisbildendes Grundglied des Roboterarms ist, wobei das erste Regallager einen ersten Roboterarmträger aufweist, der eine erste Kopplungsvorrichtung aufweist, welche in einem an den ersten Roboterarmträger angekoppelten Zustand des Roboterarms mit einer Gegenkopplungsvorrichtung des Grundglieds des Roboterarms zusammenwirkt, derart, dass in einer ersten Konfiguration des Logistiksystems das Grundglied des Roboterarms mit dem ersten Roboterarmträger automatisch verriegelt und automatisch lösbar verbunden ist, und das weitere Regallager einen weiteren Roboterarmträger aufweist, der eine weitere Kopplungsvorrichtung aufweist, welche in einem an den weiteren Roboterarmträger angekoppelten Zustand des Roboterarms mit der Gegenkopplungsvorrichtung des Grundglieds des Roboterarms zusammenwirkt, derart, dass in einer von der ersten Konfiguration verschiedenen zweiten Konfiguration des Logistiksystems das Grundglied des Roboterarms mit dem weiteren Roboterarmträger automatisch verriegelt und automatisch lösbar verbunden ist.

Das vorliegende Logistiksystem kann insbesondere in Form einer Produktionslogistik oder Distributionslogistik verwendet werden. Es ist Teil für die Planung, die Ausführung und die Steuerung der Bewegung oder der Lagerung von Gegenständen oder Gütern innerhalb eines Organisationssystems, welches Gegenstände oder Güter nach vorgegebenen spezifischen Aufgaben behandelt. Ein Behandeln kann bereits der bloße Transport oder die kurzzeitige oder längerfristige Lagerung der Gegenstände oder Güter innerhalb des Organisationssystems sein. Auch wenn im Rahmen eines speziellen Ausführungsbeispiels das vorliegende Logistiksystem als ein Logistiksystem der vertikalen Landwirtschaft beschrieben ist, kann das vorliegende Logistiksystem auch anderen Zwecken dienen, so beispielsweise der Kommissionierung von Versandgütern oder Ähnlichem.

Das Regallager dient der Lagerung der Gegenstände oder Güter in mehreren übereinander angeordneten Lagerebenen. Einzelne Gegenstände oder Güter können beispielsweise in Behältern, auf Ablagen ("Trays") oder in Form von Gebinden zusammengefasst sein. Das Regallager kann je nach spezieller Ausgestaltung des Logistiksystems generell wahlweise stationär, d.h. ortsfest oder mobil, d.h. ortsveränderlich, insbesondere fahrbar ausgebildet sein.

In gleicher Weise dient jedes weitere Regallager der Lagerung der Gegenstände oder Güter in mehreren übereinander angeordneten Lagerebenen. Einzelne Gegenstände oder Güter können auch hier beispielsweise in Behältern, auf Ablagen ("Trays") oder in Form von Gebinden zusammengefasst sein. Jedes weitere Regallager kann je nach spezieller Ausgestaltung des Logistiksystems in gleicher Weise wahlweise stationär, d.h. ortsfest oder mobil, d.h. ortsveränderlich, insbesondere fahrbar ausgebildet sein. Unter dem Begriff "weitere Regallager" wird insbesondere verstanden, dass eine beliebig festgelegte Anzahl von mehreren Regallagern im Logistiksystem vorgesehen sein kann. So kann das Logistiksystem beispielsweise neben dem ersten Regallager ein zweites Regallager, ein drittes Regallager, ein viertes Regallager usw. aufweisen. Jedes Regallager kann eine separate Lagereinheit innerhalb des Logistiksystems bilden. Das Logistiksystem kann innerhalb eines einzelnen Gebäudes realisiert sein. Das Logistiksystem kann sich jedoch auch über zwei oder mehrere Gebäude verteilt erstrecken, so dass verschiedene Regallager in unterschiedlichen Gebäuden vorgesehen sein können.

Das Logistiksystem weist wenigstens einen Roboterarm auf. Das Logistiksystem kann aber auch zwei oder mehr Roboterarme aufweisen. Jeder Roboterarm kann eine eigenständige robotische Einheit bilden. Der jeweilige Roboterarm weist mehrere Glieder und die Glieder gegeneinander automatisch verstellbar verbindende Gelenke auf. Zum automatischen Bewegen des jeweiligen Gelenks des Roboterarms kann dem Gelenk ein Gelenksmotor zugeordnet sein, der angesteuert durch eine Steuervorrichtung das Gelenk in der gewünschten Weise automatisch bewegt und somit die jeweils durch das Gelenk verbundenen Glieder des Roboterarms gegeneinander verstellt werden.

Das basisbildende Grundglied des jeweiligen Roboterarms kann auch als Grundgestell bezeichnet werden. Es stellt insofern das Fundament dar, von dem ausgehend die sonstigen Glieder und die Gelenke des Roboterarms bewegt werden. In der kinematischen Kette der Glieder und Gelenke des Roboterarms bildet das basisbildende Grundglied das proximale Ende der kinematischen Kette und an einem dem proximale Ende gegenüberliegenden distalen Ende der kinematischen Kette ist üblicherweise ein Befestigungsflansch des Roboterarms vorgesehen, der ausgebildet ist zur Befestigung eines von dem Roboterarm zu bewegenden Endeffektor. Der Roboterarm kann im Allgemeinen in einer beliebigen kinematischen Konfiguration ausgeführt sein. Besonders zweckmäßig kann es jedoch sein, den Roboterarm in der Bauart eines SCARA-Roboterarms oder eines Leichtbauroboterarms auszubilden. In der Bauart als Leichtbauroboterarm kann es sich um eine serielle Knickarm-Kinematik mit insbesondere sieben Freiheitsgraden (Gelenken) handeln.

Der erste Roboterarmträger ist Teil des jeweils ihm zugeordneten ersten Regallagers. Der erste Roboterarmträger kann entweder stationär, d.h. ortsfest an einem Strukturbauteil des ersten Regallagers befestigt sein, oder der erste Roboterarmträger kann mobil, d.h. ortsveränderlich oder beweglich bzw. verstellbar bezüglich der Strukturbauteile des ersten Regallagers an einem der Strukturbauteile des ersten Regallagers gelagert sein. An dem ersten Regallager kann ein einziger erster Roboterarmträger vorgesehen sein oder es können an dem ersten Regallager mehrere erste Roboterarmträger vorgesehen sein. Die mobile Lagerung des ersten Roboterarmträgers am ersten Regallager ist nachfolgend noch näher beschrieben.

Die erste Kopplungsvorrichtung ist ausgebildet formschlüssig und/oder kraftschlüssig mit der Gegenkopplungsvorrichtung des Roboterarms zusammenzuwirken, und kann entweder einen Verriegelungszustand aufweisen, in dem die erste Kopplungsvorrichtung formschlüssig und/oder kraftschlüssig mit der Gegenkopplungsvorrichtung starr verbunden ist - dabei handelt es sich um eine vorübergehende starre Verbindung, die bei Bedarf automatisch gelöst werden kann -, oder einen gelösten Zustand aufweisen, in dem die formschlüssige und/oder kraftschlüssige Verbindung zwischen der ersten Kopplungsvorrichtung und der Gegenkopplungsvorrichtung aufgehoben ist, so dass die erste Kopplungsvorrichtung und die Gegenkopplungsvorrichtung sich automatisch voneinander trennen und in Folge dessen der Roboterarm von dem ersten Regallager getrennt werden kann. Anders ausgedrückt kann im automatisch gelösten Zustand der Roboterarm von dem ersten Regallager abgenommen werden. Das Abnehmen des Roboterarms von dem ersten Regallager und/oder das Anbringen des Roboterarms an das erste Regallager kann demgemäß automatisiert erfolgen, beispielsweise durch einen vom Roboterarm verschiedenen, separaten Manipulator oder durch eine nachfolgend noch näher beschriebene Kopplungsmaschine. Die Kopplungsmaschine kann dazu entweder mobil oder stationär ausgebildet sein.

Die erste Kopplungsvorrichtung kann ausgebildet sein zum Ankoppeln lediglich eines einzigen Roboterarms. Alternativ kann die erste Kopplungsvorrichtung ausgebildet sein zum Ankoppeln von zwei oder mehr Roboterarmen an demselben Roboterarmträger. Es können also zur selben Zeit statt lediglich eines einzigen Roboterarms auch zwei oder mehr Roboterarme mittels der ersten Kopplungsvorrichtung an dem ersten Regallager gleichzeitig angekoppelt sein. Je nach konkreter Ausbildung der ersten Kopplungsvorrichtung können die zwei oder mehr angekoppelten Roboterarme in ihren angekoppelten Zuständen auch gegeneinander verstellbar an dem ersten Regallager gelagert sein. Beispielsweise kann die erste Kopplungsvorrichtung von einer Zahnstange gebildet werden, die an dem ersten Regallager starr befestigt ist, wobei zwei oder mehr Roboterarme jeweils ein antreibbares Ritzel aufweisen können, so dass die zwei oder mehr an der Zahnstange des ersten Regallagers verschiebbar gelagerten Roboterarme unabhängig voneinander entlang der Zahnstange bewegt werden können, da die Ritzel der zwei oder mehr Roboterarme jeweils in die Zahnstange eingreifen. In einer solchen Ausgestaltung können die zwei oder mehr Roboterarme demgemäß nur relativ zueinander bewegt werden, da sie auf derselben Zahnstange "sitzen" und insofern nicht ihre Reihenfolge ändern d.h. tauschen können. Die zwei oder mehr Roboterarme können jedoch unabhängig voneinander von der ersten Kopplungsvorrichtung gelöst oder an die erste Kopplungsvorrichtung angebracht werden, beispielsweise um die Anzahl der Roboterarme an dem ersten Regallager zu ändern, insbesondere zu reduzieren oder zu erhöhen, oder um die Reihenfolge der verschiedenen Roboterarme an der ersten Kopplungsvorrichtung tauschen zu können. Statt einer Kombination aus Zahnstange und Ritzel kann beispielsweise auch eine Kombination aus Spindel und Spindelmutter vorgesehen sein. Das Ritzel oder die Spindelmutter kann demgemäß an dem jeweiligen Roboterarm vorgesehen sein. Das Ritzel oder die Spindelmutter ist insbesondere angetrieben ausgebildet, so dass durch ein Antreiben des Ritzels bzw. der Spindelmutter der jeweilige Roboterarm an der Zahnstange bzw. der Spindel entlang bewegt werden kann. Ein Antrieb für das Ritzel oder die Spindelmutter, der insoweit Teil des Roboterarms ist, kann beispielsweise über eine Stromschiene des ersten Regallagers oder durch einen Akkumulator des Roboterarms mit elektrischer Energie versorgt werden.

Die Gegenkopplungsvorrichtung kann nach dem Stecker/Buchse-Prinzip zu der ersten Kopplungsvorrichtung korrespondierend ausgebildet sein. Die Gegenkopplungsvorrichtung und die erste Kopplungsvorrichtung können demgemäß ineinander greifende Formschlusselemente, wie beispielsweise Klauen, Riegel, Rasthaken und/oder Bajonettverbindungsmittel aufweisen. Die entsprechenden Formschlusselemente können korrespondierende Anschrägungen oder Konusflächen aufweisen, um ein automatisches Zusammenfügen von Gegenkopplungsvorrichtung und erster Kopplungsvorrichtung zu erleichtern. In gleicher Weise kann auch die weitere Kopplungsvorrichtung korrespondierend zur Gegenkopplungsvorrichtung nach dem Stecker/Buchse-Prinzip ausgebildet sein. Die Gegenkopplungsvorrichtung und die weitere Kopplungsvorrichtung können demgemäß ineinander greifende Formschlusselemente, wie beispielsweise Klauen, Riegel, Rasthaken und/oder Bajonettverbindungsmittel aufweisen. Die entsprechenden Formschlusselemente können korrespondierende Anschrägungen oder Konusflächen aufweisen, um ein automatisches Zusammenfügen von Gegenkopplungsvorrichtung und weiterer Kopplungsvorrichtung zu erleichtern.

Im angekoppelten Zustand ist die Gegenkopplungsvorrichtung des Roboterarms mit der ersten Kopplungsvorrichtung oder der jeweils weiteren Kopplungsvorrichtung vorübergehend starr verbunden. Die starre Verbindung kann bei Bedarf automatisch gelöst werden, um den angekoppelten Zustand automatisch aufzulösen. In einem automatisch gelösten Zustand der Gegenkopplungsvorrichtung kann der Roboterarm automatisch von dem jeweiligen ersten Regallager oder weiteren Regallager entfernt erden und anschließend mit einem anderen Regallager zusammengebracht und an diesem anderen Regallager automatisch angekoppelt werden.

Durch das wahlweise Ankoppeln des Roboterarms an das erste Regallager oder das weitere Regallager, oder das Abkoppeln des Roboterarms von dem ersten Regallager oder von dem weiteren Regallager kann die jeweilige momentane Konfiguration des Logistiksystems geändert werden. Diese Änderung kann insbesondere ohne personellen Bedarf automatisch ausgeführt werden, beispielsweise mittels eines separaten Manipulators oder einer im Weiteren noch näher beschriebenen Kopplungsmaschine, die jeweils automatisch angesteuert sein können.

Demgemäß ist die Verbindung der Gegenkopplungsvorrichtung mit der ersten Kopplungsvorrichtung oder mit der jeweils weiteren Kopplungsvorrichtung automatisch verriegelbar und automatisch lösbar ausgebildet.

Eine derartige Verriegelungsvorrichtung kann beispielsweise elektrisch angesteuert sein.

Der weitere Roboterarmträger ist Teil des jeweils ihm zugeordneten weiteren Regallagers. Der weitere Roboterarmträger kann entweder stationär, d.h. ortsfest an einem Strukturbauteil des weiteren Regallagers befestigt sein, oder der weitere Roboterarmträger kann mobil, d.h. ortsveränderlich oder beweglich bzw. verstellbar bezüglich der Strukturbauteile des weiteren Regallagers an einem der Strukturbauteile des weiteren Regallagers gelagert sein. An dem weiteren Regallager kann ein einziger weiterer Roboterarmträger vorgesehen sein oder es können an dem weiteren Regallager mehrere weitere Roboterarmträger vorgesehen sein. Die mobile Lagerung des weiteren Roboterarmträgers am weiteren Regallager ist nachfolgend noch näher beschrieben.

Die weitere Kopplungsvorrichtung ist ausgebildet formschlüssig und/oder kraftschlüssig mit der Gegenkopplungsvorrichtung des Roboterarms zusammenzuwirken, und kann entweder einen Verriegelungszustand aufweisen, in dem die weitere Kopplungsvorrichtung formschlüssig und/oder kraftschlüssig mit der Gegenkopplungsvorrichtung starr verbunden ist - dabei handelt es sich um eine vorübergehende starre Verbindung, die bei Bedarf automatisch gelöst werden kann -, oder einen gelösten Zustand aufweisen, in dem die formschlüssige und/oder kraftschlüssige Verbindung zwischen der weiteren Kopplungsvorrichtung und der Gegenkopplungsvorrichtung aufgehoben ist, so dass die weitere Kopplungsvorrichtung und die Gegenkopplungsvorrichtung sich automatisch voneinander trennen und in Folge dessen der Roboterarm von dem weiteren Regallager getrennt werden kann. Anders ausgedrückt kann im automatisch gelösten Zustand der Roboterarm von dem weiteren Regallager abgenommen werden. Das Abnehmen des Roboterarms von dem weiteren Regallager und/oder das Anbringen des Roboterarms an das weitere Regallager kann demgemäß automatisiert erfolgen, beispielsweise durch einen vom Roboterarm verschiedenen, separaten Manipulator oder durch eine nachfolgend noch näher beschriebene Kopplungsmaschine. Die Kopplungsmaschine kann dazu entweder mobil oder stationär ausgebildet sein.

Die weitere Kopplungsvorrichtung kann ausgebildet sein zum Ankoppeln lediglich eines einzigen Roboterarms. Alternativ kann die weitere Kopplungsvorrichtung ausgebildet sein zum Ankoppeln von zwei oder mehr Roboterarmen an demselben Roboterarmträger. Es können also zur selben Zeit statt lediglich eines einzigen Roboterarms auch zwei oder mehr Roboterarme mittels der weiteren Kopplungsvorrichtung an dem weiteren Regallager gleichzeitig angekoppelt sein. Je nach konkreter Ausbildung der weiteren Kopplungsvorrichtung können die zwei oder mehr angekoppelten Roboterarme in ihren angekoppelten Zuständen auch gegeneinander verstellbar an dem weiteren Regallager gelagert sein. Beispielsweise kann die weitere Kopplungsvorrichtung von einer Zahnstange gebildet werden, die an dem weiteren Regallager starr befestigt ist, wobei zwei oder mehr Roboterarme jeweils ein antreibbares Ritzel aufweisen können, so dass die zwei oder mehr an der Zahnstange des weiteren Regallagers verschiebbar gelagerten Roboterarme unabhängig voneinander entlang der Zahnstange bewegt werden können, da die Ritzel der zwei oder mehr Roboterarme jeweils in die Zahnstange eingreifen. In einer solchen Ausgestaltung können die zwei oder mehr Roboterarme demgemäß nur relativ zueinander bewegt werden, da sie auf derselben Zahnstange "sitzen" und insofern nicht ihre Reihenfolge ändern d.h. tauschen können. Die zwei oder mehr Roboterarme können jedoch unabhängig voneinander von der weiteren Kopplungsvorrichtung gelöst oder an die weitere Kopplungsvorrichtung angebracht werden, beispielsweise um die Anzahl der Roboterarme an dem weiteren Regallager zu ändern, insbesondere zu reduzieren oder zu erhöhen, oder um die Reihenfolge der verschiedenen Roboterarme an der weiteren Kopplungsvorrichtung tauschen zu können. Statt einer Kombination aus Zahnstange und Ritzel kann beispielsweise auch eine Kombination aus Spindel und Spindelmutter vorgesehen sein. Das Ritzel oder die Spindelmutter kann demgemäß an dem jeweiligen Roboterarm vorgesehen sein. Das Ritzel oder die Spindelmutter ist insbesondere angetrieben ausgebildet, so dass durch ein Antreiben des Ritzels bzw. der Spindelmutter der jeweilige Roboterarm an der Zahnstange bzw. der Spindel entlang bewegt werden kann. Ein Antrieb für das Ritzel oder die Spindelmutter, der insoweit Teil des Roboterarms ist, kann beispielsweise über eine Stromschiene des weiteren Regallagers oder durch einen Akkumulator des Roboterarms mit elektrischer Energie versorgt werden.

Wenn im Rahmen der Erfindung eine technische Teillösung oder ein technischer Zusammenhang mit Bezug zu einem Roboterarm, also einem einzigen Roboterarm, beschrieben ist, so liegt es dennoch im Rahmen der Offenbarung der Erfindung, dass auch ein zweiter, dritter oder weiterer Roboterarm gemäß einer solchen technischen Teillösung oder in einem solchen technischen Zusammenhang ausgebildet sein kann.

In einer weitergebildeten Ausführungsform kann das Logistiksystem eine automatische Verstellvorrichtung umfassen, die ausgebildet ist, in der ersten Konfiguration des Logistiksystems, in der das Grundglied des Roboterarms mit dem ersten Roboterarmträger des ersten Regallagers gekoppelt ist, das Grundglied des Roboterarms relativ zum ersten Regallager automatisch angetrieben verstellbar zu lagern, und in der zweiten Konfiguration des Logistiksystems, in der das Grundglied des Roboterarms mit dem weiteren Roboterarmträger des weiteren Regallagers gekoppelt ist, das Grundglied des Roboterarms relativ zum weiteren Regallager automatisch angetrieben verstellbar zu lagern.

In einer ersten Ausführungsvariante der automatischen Verstellvorrichtung kann diese vollständig in das jeweilige Regallager, d.h. das erste Regallager oder jedes weitere Regallager, integriert sein. Dies bedeutet, dass beispielsweise die erste Kopplungsvorrichtung bzw. die jeweils weitere Kopplungsvorrichtung mittels der automatischen Verstellvorrichtung relativ zu den Strukturbauteilen des ersten Regallagers bzw. des weiteren Regallagers durch die automatische Verstellvorrichtung verstellbar gelagert ist. Wenn der Roboterarm mit seiner Gegenkopplungsvorrichtung dann an der entsprechenden Kopplungsvorrichtung angekoppelt ist, kann der Roboterarm mittels der automatischen Verstellvorrichtung relativ zu den Strukturbauteilen des ersten Regallagers bzw. des weiteren Regallagers automatisch verstellt werden.

In einer zweiten Ausführungsvariante der automatischen Verstellvorrichtung kann diese vollständig in den Roboterarm integriert sein. Dies bedeutet, dass beispielsweise das basisbildende Grundglied des Roboterarms mittels der automatischen Verstellvorrichtung relativ zu seiner Gegenkopplungsvorrichtung durch die automatische Verstellvorrichtung verstellbar gelagert ist. Wenn der Roboterarm mit seiner Gegenkopplungsvorrichtung dann an der entsprechenden Kopplungsvorrichtung des jeweiligen Regallagers angekoppelt ist, kann der Roboterarm mittels der automatischen Verstellvorrichtung relativ zu seiner Gegenkopplungsvorrichtung und somit relativ zu den Strukturbauteilen des ersten Regallagers bzw. des weiteren Regallagers automatisch verstellt werden.

In einer dritten Ausführungsvariante der automatischen Verstellvorrichtung kann diese durch ein Verbindungsgelenk zwischen der Gegenkopplungsvorrichtung des Roboterarms und der entsprechenden Kopplungsvorrichtung des jeweiligen Regallagers gebildet werden. So kann beispielsweise an dem Roboterarm ein angetriebenes Ritzel gelagert sein, das in einem an das jeweilige Regallager angekoppelten Zustand des Roboterarms in eine Zahnstange des jeweiligen Regallagers eingreift. Die Zahnstange kann dabei starr mit einem der Strukturbauteile des ersten Regallagers bzw. des weiteren Regallagers verbunden sein. Durch eine angetriebene Drehbewegung des Ritzels des Roboterarms wird der Roboterarm wegen des Eingriffs des Ritzels in die Zahnstange des Regallagers reaktiv zu diesem Regallager verstellt, wenn der Roboterarm an dieses Regallager angekoppelt ist. In einem an das jeweilige Regallager angekoppelten Zustand des Roboterarms ist also das Ritzel des Roboterarms mit der Zahnstange des Regallagers in Eingriff. Ist der Roboterarm an ein anderes Regallager angekoppelt, greift das Ritzel des Roboterarms in die andere Zahnstange des anderen Regallagers ein. Die automatische Verstellvorrichtung wird in dieser dritten Ausführungsvariante also immer durch eine Verbindung des Roboterarms mit dem jeweils angekoppelten Regallager gebildet.

In allen Ausführungsvarianten kann die automatische Verstellvorrichtung als ein Linearantrieb ausgebildet sein. Im Falle eines Linearantriebs führt die automatische Verstellvorrichtung eine geradlinige Bewegung aus.

Die geradlinige Bewegung der automatischen Verstellvorrichtung kann insbesondere in einer vertikalen Richtung erfolgen. In einer solchen Ausführung bildet die automatische Verstellvorrichtung also eine Hubvorrichtung.

Alternativ kann die geradlinige Bewegung der automatischen Verstellvorrichtung aber beispielsweise auch horizontal oder diagonal erfolgen, oder in eine andere Richtung erfolgen. Die Bewegung muss auch nicht notwendiger Weise eine geradlinige Bewegung sein, vielmehr kann in einer speziellen Ausführungsvariante die automatische Verstellvorrichtung einen von einem geraden Pfad abweichend, anderen Pfad vorgeben.

Mittels der automatischen Verstellvorrichtung kann der Roboterarm in seinem an das jeweilige Regallager angekoppelten Zustand variabel wahlweise in die Nähe einer ersten Lagerebene des Regallagers gebracht werden oder in die Nähe einer anderen, weiteren Lagerebene des Regallagers gebracht werden. Gegebenenfalls kann die automatische Verstellvorrichtung ausgebildet sein, den Roboterarm von einer lateralen Seite des jeweiligen Regallagers zu einer anderen lateralen Seite des jeweiligen Regallagers zu bringen. So kann der Roboterarm wahlweise von unterschiedlichen Seiten ausgehend in die jeweilige Lagerebene eingreifen.

Die automatische Verstellvorrichtung kann ausgebildet sein, das Grundglied des Roboterarms in der ersten Konfiguration des Logistiksystems linear höhenverstellbar an dem ersten Regallager automatisch angetrieben verstellbar zu lagern und in der zweiten Konfiguration des Logistiksystems linear höhenverstellbar an dem weiteren Regallager automatisch angetrieben verstellbar zu lagern.

Mittels der linear höhenverstellbaren Verstellvorrichtung kann der Roboterarm in seinem an das jeweilige Regallager angekoppelten Zustand variabel wahlweise in die Nähe einer ersten Lagerebene des Regallagers gebracht werden oder in die Nähe einer anderen, weiteren Lagerebene, die in einer anderen Höhenlage am Regallager angeordnet ist, gebracht werden. Die linear höhenverstellbare Verstellvorrichtung kann insofern eine Hubvorrichtung bilden

Die linear höhenverstellbare Verstellvorrichtung kann beispielsweise ein angetriebenes Ritzel umfassen, das in eine Zahnstange eingreift. Die Zahnstange kann beispielsweise starr mit einem der Strukturbauteile des ersten Regallagers bzw. des weiteren Regallagers verbunden sein. Das angetriebene Ritzel kann beispielsweise an der Kopplungsvorrichtung gelagert sein oder direkt in dem Roboterarm gelagert sein.

Durch eine angetriebene Drehbewegung des Ritzels wird der an das jeweilige Regallager bzw. an die jeweilige Kopplungsvorrichtung des Regallagers angekoppelte Roboterarm reaktiv zu diesem Regallager verstellt.

Statt einer Verstellvorrichtung in Form einer Zahnstange und eines Ritzels, kann die Verstellvorrichtung beispielsweise auch von einer Hubspindel gebildet werden, auf der eine Spindelmutter höhenverstellbar läuft. Die Hubspindel kann beispielsweise drehbar angetrieben an einem der Strukturbauteile des ersten Regallagers bzw. des weiteren Regallagers gelagert sein. Die durch die Hubspindel in der Höhe verstellbare Spindelmutter kann beispielsweise mit der Kopplungsvorrichtung verbunden sein oder direkt mit dem Roboterarm verbunden sein. Durch eine angetriebene Drehbewegung der Hubspindel wird der an das jeweilige Regallager bzw. an die jeweilige Kopplungsvorrichtung des Regallagers angekoppelte Roboterarm reaktiv zu diesem Regallager verstellt. In einer Abwandlung kann die Hubspindel starr befestigt sein und die Spindelmutter drehbar angetrieben gelagert sein.

Alternativ zu einem Spindeltrieb oder einem Zahnstangentrieb, kann die Verstellvorrichtung auch mittels Hydraulikzylinder oder Pneumatikzylinder angetrieben verstellbar gelagert sein.

Die automatische Verstellvorrichtung kann einen Antrieb aufweisen, der ausgebildet ist, bei seiner Aktivierung das Grundglied des Roboterarms in der ersten Konfiguration relativ zum ersten Regallager automatisch angetrieben zu bewegen und in der zweiten Konfiguration relativ zum weiteren Regallager automatisch angetrieben zu bewegen, wobei der Antrieb als ein Teil des Roboterarms ausgebildet ist, der in einem vom ersten Regallager und/oder vom weiteren Regallager abgekoppelten Zustand zusammen mit dem Roboterarm vom ersten Regallager und/oder vom weiteren Regallager abgekoppelt ist.

Der Antrieb kann ausgebildet sein zum Antreiben einer als Spindeltrieb, Zahnstangentrieb, Hydraulikeinrichtung und/oder Pneumatikeinrichtung ausgebildeten Verstellvorrichtung, wie oben beschrieben.

Der Antrieb kann insbesondere ein elektromotorischer Antrieb sein. Demgemäß kann der Antrieb einen Elektromotor umfassen.

Dem Motor, insbesondere der Elektromotor kann ein Getriebe zugeordnet sein. Der Motor, insbesondere der Elektromotor kann von einer Antriebssteuerung, insbesondere einer elektrischen bzw. elektronischen Antriebssteuerung automatisch angesteuert sein.

Der Antrieb kann insbesondere als ein Teil des Roboterarms ausgebildet sein. Alternativ kann, je nach Ausführungsform, der Antrieb als ein Teil des jeweiligen Regallagers ausgebildet sein.

Der Roboterarm kann einen Energiespeicher aufweisen, der ausgebildet ist, den Antrieb und/oder wenigstens einen, jeweils einem Gelenk des Roboterarms zugeordneten Gelenksmotor des Roboterarms unabhängig von der jeweiligen Konfiguration des Logistiksystems mit Antriebsenergie zu versorgen.

Indem der Roboterarm einen Energiespeicher aufweist, kann der Roboterarm unabhängig von einer externen Energieversorgung, insbesondere unabhängig von einer Energieversorgung über die Regallager bewegt d.h. angetrieben werden.

Der Energiespeicher kann insbesondere ein elektrischer Energiespeicher, ein hydraulischer Energiespeicher oder ein pneumatischer Energiespeicher sein.

Im Falle eines elektrischen Energiespeichers kann dieser beispielsweise ein elektrischer Akkumulator sein. Der elektrische Akkumulator kann insbesondere wieder aufladbar ausgebildet sein.

Der Energiespeicher kann einerseits dazu dienen, den beschriebenen Antrieb der Verstellvorrichtung mit Energie, insbesondere elektrischer Energie zu versorgen, so dass der gesamte Roboterarm relativ zu dem Regallager, an dem er angekoppelt ist, mittels einer Versorgung aus diesem Energiespeicher verstellt werden kann.

Andererseits kann der Energiespeicher dazu dienen, die Gelenksmotoren des Roboterarms mit Energie, insbesondere elektrischer Energie zu versorgen, so dass der Roboterarm mittels einer Versorgung aus diesem Energiespeicher in seiner jeweiligen Pose verstellt werden kann, d.h. die relative Lage der Glieder des Roboterarms zueinander verstellt werden können und zwar durch angetriebene Bewegungen der Gelenke des Roboterarms.

Indem der Roboterarm den Energiespeicher aufweist kann unabhängig von der jeweiligen Konfiguration des Logistiksystems der Roboterarm umpositioniert und/oder dessen Pose automatisch verändert werden bzw. der Roboterarm bewegt werden.

Der Energiespeicher kann mit einem Rekuperationssystem, wie beispielsweise einer Rekuperationsbremse des Roboterarms verbunden sein, so dass beispielsweise die Bremsenergie für das Verzögern und/oder Anhalten des bewegten Roboterarms zum Aufladen des Energiespeichers genutzt werden kann. Ein solches Wiedergewinnen von Energie ist besonders dann zweckmäßig, wenn der betreffende Roboterarm an dem jeweiligen Regallager höhenverstellbar gelagert ist, so dass die potentielle Energie, welche der Roboterarm beim Absenken aus einer höheren Lage in eine niedrigere Lage abgibt, in Form von vorzugsweise elektrischer Energie gespeichert werden kann.

Die Konfiguration des Logistiksystems kennzeichnet sich ganz allgemein insbesondere durch die jeweilige momentane Zuordnung eines Roboterarms oder mehrerer Roboterarme zu einem Regallager oder zu mehreren Regallagern. So kann beispielsweise ein einzelner Roboterarm mehreren verschiedenen Regallagern zugeordnet sein, wobei der Roboterarm zu einem Zeitpunkt wahlweise an einem einzigen der mehreren Regallagern angekoppelt ist. Alternativ können auch mehrere Roboterarme einem einzelnen Regallager zugeordnet werden, so dass dieses Regallager zu einem bestimmten Zeitpunkt wahlweise mit einem Roboterarm, mit zwei Roboterarmen oder mit mehreren Roboterarmen versehen sein kann. Wahlweise kann also ein einziger Roboterarm, oder es können zwei oder mehr Roboterarme gleichzeitig an einem der Regallager, insbesondere an einem gemeinsamen Roboterarmträger, einer gemeinsamen Zahnstange, einer gemeinsamen Spindel oder einer gemeinsamen Schiene, wie Stromschiene, angekoppelt sein.

Das erste Regallager kann wenigstens eine erste Stromschiene aufweisen, die ausgebildet ist, elektrische Energie über das erste Regallager an den Roboterarm zuzuführen, wenn in der ersten Konfiguration der Roboterarm mittels der ersten Kopplungsvorrichtung an das erste Regallager angekoppelt ist und das weitere Regallager kann wenigstens eine weitere Stromschiene aufweisen, die ausgebildet ist, elektrische Energie über das weitere Regallager an den Roboterarm zuzuführen, wenn in der zweiten Konfiguration der Roboterarm mittels der weiteren Kopplungsvorrichtung an das weitere Regallager angekoppelt ist.

Mittels der wenigstens einen ersten Stromschiene und/oder mittels der wenigstens einen weiteren Stromschiene kann elektrische Energie über das jeweilige Regallager hinweg an den Roboterarm zugeführt werden, wenn der Roboterarm an dieses Regallager angekoppelt ist. In dieser Ausführungsform kann ein eigener Energiespeicher an dem Roboterarm gegebenenfalls entfallen.

Das Logistiksystem kann in einer speziellen Ausführungsform wenigstens ein Fahrzeug, insbesondere fahrerloses und/oder autonomes Fahrzeug umfassen, das eine automatische Kopplungsmaschine aufweist, die ausgebildet, den vom wenigstens einen Fahrzeug in eine räumliche Nähe an das erste Regallager herantransportierten Roboterarm automatisch an die erste Kopplungsvorrichtung des ersten Regallagers anzukoppeln, wenn das Logistiksystem in die erste Konfiguration gebracht werden soll, und die automatische Kopplungsmaschine ausgebildet ist, den vom wenigstens einen Fahrzeug in eine räumliche Nähe an das weitere Regallager herantransportierten Roboterarm automatisch an die weitere Kopplungsvorrichtung des weiteren Regallagers anzukoppeln, wenn das Logistiksystem in die zweite Konfiguration gebracht werden soll.

Das Fahrzeug kann in der grundlegenden Ausführung beliebig ausgebildet sein. Demgemäß kann das Fahrzeug von einer Person gefahren werden. Alternativ kann das Fahrzeug ein fahrerloses oder autonomes Fahrzeug sein.

Ist das Fahrzeug ausgebildet, von einer Person gefahren zu werden, so kann beispielsweise vorgesehen sein, dass die Person, d.h. der Fahrer den jeweils an das erste Regallager oder an das weitere Regallager anzukoppelnden Roboterarm manuell ankoppelt. Alternativ kann eine mechanische oder nur teilautomatisierte Kopplungsmaschine vorgesehen sein, die ausgebildet ist, von einer Person, d.h. dem Fahrer manuell betätigt bzw. manuell gesteuert zu werden. Auch im Falle eines Fahrzeugs mit einer Person als Fahrer kann jedoch eine vollautomatisierte Kopplungsmaschine vorgesehen sein. Ist das Fahrzeug durch eine Person, d.h. einem Fahrer gesteuert, so kann auch ein Feinpositionieren des Fahrzeugs bezüglich des ersten Regallagers oder des weiteren Regallagers durch die Person d.h. den Fahrer durchgeführt werden, um den jeweils anzukoppelnden Roboterarm bezüglich dem ersten Regallager oder dem weiteren Regallager genau zu positionieren, damit der Roboterarm sicher angekoppelt werden kann. In einer solchen Ausgestaltung können dann beispielsweise spezielle Sensoren zum Feinpositionieren des Fahrzeugs gegebenenfalls entfallen.

Das fahrerlose Fahrzeug muss nicht notwendiger Weise autonom fahren, sondern kann beispielsweise auf fest vorgegebenen oder vorab definierten Pfaden automatisch gesteuert fahren. So kann das fahrerlose Fahrzeug beispielsweise ein fahrerloses Transportsystem (FTS) sein.

Fahrerlose Transportsysteme (FTS) sind innerbetriebliche, flurgebundene Fördersysteme mit automatisch gesteuerten Fahrzeugen, deren primäre Aufgabe der Materialtransport, nicht aber der Personentransport ist. Sie werden innerhalb und außerhalb von Gebäuden eingesetzt.

Das Fahrzeug kann generell einen Fahrzeuggrundkörper aufweisen, am Fahrzeuggrundkörper angeordnete Räder, von denen wenigstens einem der Räder ein Fahrantrieb zugeordnet ist und dem wenigstens einen Fahrantrieb eine Steuervorrichtung zugeordnet ist, die eingerichtet ist, das Fahrzeug innerhalb des Logistiksystems zu bewegen. Der Fahrantrieb kann vorzugsweise ein elektrischer Fahrantrieb sein, insbesondere ein geregelter elektrische Fahrantrieb. Das fahrerlose Transportfahrzeug kann beispielsweise als ein holonomes bzw. omnidirektionales fahrerloses Transportfahrzeug ausgebildet sein. In diesem Fall umfasst das fahrerlose Transportfahrzeug omnidirektionale Räder, vorzugsweise sogenannte Mecanum-Räder, deren Fahrantriebe von der Steuervorrichtung angesteuert werden.

Ein solches Omnidirektionalräder-Fahrzeug kann zum fahrerlosen Fahren ausgebildet sein. Dazu weist das Omnidirektionalräder-Fahrzeug eine Steuervorrichtung auf, die auch als Fahrsteuervorrichtung bezeichnet werden kann. Die Steuervorrichtung steuert und/oder regelt die Drehrichtungen und die Drehgeschwindigkeiten bzw. ggf. auch die Drehbeschleunigungen der angetriebenen Räder des Omnidirektionalräder-Fahrzeugs. Das Omnidirektionalräder-Fahrzeug kann neben den angetriebenen Rädern auch antriebslose Räder aufweisen, die ohne von der Steuervorrichtung angesteuert zu werden, nur drehbar am Fahrzeugkörper des Omnidirektionalräder-Fahrzeugs gelagert sind, ohne mit einer Antriebsvorrichtung verbunden zu sein. Das Omnidirektionalräder-Fahrzeug kann beispielsweise ein fahrerloses Transportsystem (FTS) sein.

Im Falle eines autonomen Fahrzeugs, das gemäß den oben beschriebenen Ausführungen ausgebildet sein kann, kann das Fahrzeug ein Navigationssystem, ein Lokalisationssystem und im weitesten Sinne ein Pfadplanungssystem umfassen. In einer solchen Ausgestaltung kann das Fahrzeug in gewissem Rahmen seine Fahrt, insbesondere den Pfad, die Geschwindigkeit und die Beschleunigung selbst bestimmen. Auch das autonome Fahrzeug ist vorzugsweise fahrerlos ausgebildet.

Die automatische Kopplungsmaschine entkoppelt den Roboterarm von einem Regallager, an dem es bisher angekoppelt ist, und koppelt den Roboterarm anschließend an ein anderes Regallager an. Die automatische Kopplungsmaschine kann als eine einfache Vorrichtung ausgebildet sein, die automatisch das Ankoppeln und Abkoppeln des Roboterarms durchführt. Insoweit kann es ausreichend sein, wenn die Kopplungsmaschine beispielsweise lediglich einen einzigen Freiheitsgrad aufweist. Alternativ kann die automatische Kopplungsmaschine von einem separaten Roboter mit mehreren Freiheitsgraden gebildet werden. Der Roboter kann dazu eingerichtet sein - beispielsweise durch einen speziell darauf abgestimmten Endeffektor - den Roboterarm von einem Regallager abzukoppeln und an ein anderes Regallager anzukoppeln. In einer ersten Variante kann die automatische Kopplungsmaschine, insbesondere der Roboter auf dem beschriebenen fahrerlosen und/oder autonomen Fahrzeug angebracht sein und durch Fahren des Fahrzeugs die automatische Kopplungsmaschine, insbesondere der Roboter von einem Regallager zum nächsten Regallager transportiert werden, um dort den Roboterarm anzukoppeln oder abzukoppeln.

Die räumliche Nähe ergibt sich dabei durch den Umstand, dass das Fahrzeug zumindest so nahe an das entsprechende Regallager herangefahren ist, dass die automatische Kopplungsmaschine den angekoppelten Roboterarm von dem Regallager abkoppeln kann. Die automatische Kopplungsmaschine kann dann den Roboterarm aufnehmen und insoweit auf dem Fahrzeug zwischenlagern. Mittels des Fahrzeugs kann der Roboterarm anschließend zu einem anderen Regallager gefahren d.h. transportiert werden und dort mittels der automatischen Kopplungsmaschine wiederum an das andere Regallager angekoppelt werden.

Das Logistiksystem kann ergänzend oder alternativ aber auch eine stationäre Wechselstation aufweisen und wenigstens ein Fahrzeug, insbesondere fahrerloses und/oder autonomes Fahrzeug, das ausgebildet ist, wahlweise das erste Regallager oder das weitere Regallager durch Fahren des wenigstens einen Fahrzeugs transportabel aufzunehmen, wobei die stationäre Wechselstation eine automatische Kopplungsmaschine aufweist, die ausgebildet, den Roboterarm an das vom wenigstens einen Fahrzeug in eine räumliche Nähe der stationären Wechselstation herantransportierte erste Regallager automatisch anzukoppeln oder von diesem abzukoppeln, wenn das Logistiksystem zwischen der ersten Konfiguration und der zweiten Konfiguration gewechselt werden soll, oder den Roboterarm an das vom wenigstens einen Fahrzeug in eine räumliche Nähe der stationären Wechselstation herantransportierte weitere Regallager automatisch anzukoppeln oder von diesem abzukoppeln, wenn das Logistiksystem zwischen der ersten Konfiguration und der zweiten Konfiguration gewechselt werden soll.

Die automatische Kopplungsmaschine ist in dieser Variante an der stationären Wechselstation ausgebildet und nicht an dem Fahrzeug. Das Fahrzeug wiederum weist Aufnahmeeinrichtungen auf, welche ausgebildet sind ein jeweiliges Regallager aufzunehmen und zu transportieren. Hierdurch kommt die automatische Kopplungsmaschine also nicht zu dem Regallager, sondern das Regallager kommt zu der stationären Kopplungsmaschine.

Das erste Regallager, jedes weitere Regallager, das wenigstens eine Fahrzeug, insbesondere fahrerlose und/oder autonome Fahrzeug, der Roboterarm und/oder die stationäre Wechselstation können jeweils wenigstens eine Sensoreinrichtung aufweisen, die ausgebildet ist, die momentane relative Position und/oder relative Lage des Roboterarms bezüglich des ersten Regallagers, jedes weiteren Regallagers, des wenigstens einen Fahrzeugs, insbesondere fahrerlosen und/oder autonomen Fahrzeugs und/oder der stationären Wechselstation automatisch zu bestimmen.

Die Sensoreinrichtung kann beispielsweise optische Sensoren, wie Kameras, Laserscanner o.ä. umfassen, aber auch kapazitive oder magnetische Sensoren. Die Sensoreinrichtung kann auch optische Marker, wie beispielsweise Barcodes oder QR-Codes umfassen. Die Sensoreinrichtung kann je nach Anwendung auch RFID-Tags umfassen.

In einer speziellen Ausführungsform des Logistiksystems kann das Logistiksystem ein Produktionslogistiksystem sein und zum Erzeugen von Nahrungsmitteln eingerichtet sein, insbesondere in Form der sogenannten "Vertikalen Landwirtschaft" (Vertical Farming).

Das erste Regallager und jedes weitere Regallager können demgemäß jeweils mehrere Aufnahmeebenen für Pflanzen aufweisen, wobei die jeweils mehreren Aufnahmeebenen Gruppen bilden von ersten Aufnahmeebenen, die Beleuchtungseinrichtungen für Pflanzen aufweisen, von zweiten Aufnahmeebenen, die Wasserversorgungseinrichtungen oder Nährstofflösungsversorgungseinrichtungen für Pflanzen aufweisen und/oder von dritten Aufnahmeebenen, die Zwischenlagerplätze für Pflanzenträger aufweisen, wobei der Roboterarm ausgebildet und eingerichtet ist, Pflanzen oder Pflanzenträger automatisch zwischen den ersten Aufnahmeebenen, den zweiten Aufnahmeebenen und den dritten Aufnahmeebenen innerhalb eines ersten Regallagers oder eines weiteren Regallagers umzusetzen, wenn der Roboterarm an dem jeweiligen ersten Regallager oder weiteren Regallager automatisch angekoppelt ist.

Die mehrere Aufnahmeebenen für Pflanzen können beispielsweise von Fachböden gebildet werden. Auf derartigen Fachböden können einzelne Pflanzen, beispielsweise in Anzuchttöpfen oder Schalen angeordnet, direkt abgestellt werden. Alternativ können mehrere Pflanzen, beispielsweise in Gruppen auf einer Ablage, einer Palette oder einem Pflanzentray zusammengestellt, auf den Fachböden abgestellt werden. In einer anderen Ausführungsform können die mehreren Aufnahmeebenen durch seitliche Aufnahmeschienen des Regallagers gebildet werden, in welche beispielsweise Tabletts oder Paletten eingeschoben oder aufgesetzt werden können, auf denen die Pflanzen oder Pflanzentrays abgestellt sind.

Jeder Aufnahmeebene kann eine bestimmte Funktion zugeordnet sein. Die verschiedenen Aufnahmeebenen innerhalb eines Regallagers oder auch zwischen zwei verschiedenen Regallagern können demgemäß für unterschiedliche Zwecke ausgestattet sein.

Ersten Aufnahmeebenen können beispielsweise Beleuchtungseinrichtungen für Pflanzen zugeordnet sein. Die Beleuchtungseinrichtungen können in einem Abstand oberhalb der Abstellfläche der jeweiligen ersten Aufnahmeebene angeordnet sein. So können die Beleuchtungseinrichtungen beispielsweise an einer nach unten weisenden Unterseite einer unmittelbar darüber liegenden Aufnahmeebene angeordnet sein. Die Beleuchtungseinrichtungen können beispielsweise von LED-Leuchtmitteln gebildet werden.

Zweiten Aufnahmeebenen können beispielsweise Wasserversorgungseinrichtungen oder Nährstofflösungsversorgungseinrichtungen für Pflanzen zugeordnet sein. Die Wasserversorgungseinrichtungen oder Nährstofflösungsversorgungseinrichtungen können entsprechende Austrittsöffnungen oder Austrittsdüsen umfassen, über welche das Wasser oder die Nährstofflösung austritt und an die jeweiligen in dieser zweiten Aufnahmeebene abgestellten Pflanzen oder deren Wurzelballen geleitet werden kann.

Dritte Aufnahmeebenen können beispielsweise als Zwischenlagerplätze für Pflanzenträger ausgebildet sein. Diese Zwischenlagerplätze können beispielsweise gegen Lichteintritt abgedunkelt sein oder in einem abweichenden Klima, bspw. hinsichtlich Luftfeuchtigkeit und/oder Temperatur, konditioniert sein.

Der jeweilige Roboterarm kann in der Konfiguration, in der er an einem bestimmten Regallager angekoppelt ist, ausgebildet und eingerichtet sein, die Pflanzen, die Pflanzgefäße und/oder die Pflanzenträger von einer Aufnahmeebene des Regallagers in eine andere Aufnahmeebene des Regallagers automatisch umzusetzen. Außerdem kann der Roboterarm ausgebildet und eingerichtet sein, Pflanzen, die Pflanzgefäße und/oder die Pflanzenträger aus dem bestimmten Regallager automatisch ganz zu entfernen oder neu hinzukommende Pflanzen, die Pflanzgefäße und/oder die Pflanzenträger in das Regallager automatisch einzustellen.

Ein derartiges Logistiksystem in der speziellen Ausführungsform des sogenannten "Vertikalen Farmens" kann es ermöglichen, spezialisierte Roboterarme oder Manipulatoren, die zur Pflanzung, Pflege und Ernte von Pflanzen im Rahmen des "Vertical Farming" eingesetzt werden, automatisch und insbesondere mobil an mehreren, insbesondere ortsfesten Regalen einsetzen zu können. Dies verspricht eine Reduktion der Kosten, da kostenintensive Automatisierungstechnik nicht mehrfach angeschafft werden muss bzw. nur gerade so viel, wie global in der Anlage benötigt wird. Es vereinfacht die Skalierung und die Reaktion auf unvorhergesehene Marktentwicklungen.

Es kann dazu ein mobiles Fahrzeug eingesetzt werden, der einen oder mehrere Manipulatoren d.h. Roboterarme, wie insbesondere SCARA-Arme, mit spezialisierten Endeffektoren innerhalb der Produktionsstätte verbringen kann. Das mobile Fahrzeug kann mit einem Mechanismus, d.h. der automatischen Kopplungsmaschine, ausgestattet sein, der den getragenen Roboterarm, beispielsweise mittels Führungsschlitten einer Linearführung und ortsfesten Linearschienen mit dem Regallager verbinden kann. Der Mechanismus kann beispielsweise eine aktuierte Mehrachskinematik sein, ggf. kann aber auch ein Hubmechanismus mit mechanischer Nachgiebigkeit ausreichend sein. Das mobile Fahrzeug beispielsweise kann mit Sensorik ausgestattet sein, die es ihm erlaubt, sich gegenüber der Umgebung zu lokalisieren und die Linearschienen zum Andocken präzise genug in ihrer Lage zum mobilen Roboter zu erkennen, etwa durch Kameras, Laserscanner oder dergleichen.

Die Regale können, wie bereits beschrieben, Vorrichtungen zur Versorgung mit Wasser und/oder Nährstoffen, sowie Beleuchtung und/oder Haltesysteme für die Pflanzen aufweisen, die mit oder ohne Substrat ausgestattet sein können. Zusätzlich kann entlang eines vertikalen Pfades eine Linearschiene an den Regallagern montiert sein, an denen der Roboterarm angekoppelt werden kann. Dazu kann der Mechanismus d.h. die automatische Kopplungsmaschine verwendet werden, die dem angekoppelten Roboterarm erlaubt, sich selbst an der Linearschiene zu heben oder zu senken, beispielsweise mittels einer Zahnstange am Regal, in die ein angetriebenes Zahnrad (Ritzel) am Roboterarm eingreift. Dabei kann eine elektrische Verbindung zwischen dem Regal und dem Roboterarm bestehen, beispielsweise über eine Schiene mit Schleifkontakten, in die der Roboterarm eingreifen kann, um sich mit elektrischer Energie zu versorgen, sofern er nicht für diesen Zweck über eine Batterie bzw. einem Akkumulator verfügt. Das Regal kann mit Markierungen im Sinne eines linearen Messsystems ausgestattet sein, auf dessen Basis ein Sensor am Roboterarm beispielsweise die Höhenlage des Roboterarms am Regal bestimmen und eine gewünschte Sollposition genau einregeln kann.

Der eine Roboterarm oder die mehreren Roboterarme können mit einem Schlitten für einen Führungsmechanismus ausgestattet sein, der mit der am Regal angebrachten Linearachse verbunden werden kann. Die Linearachse kann dabei z.B. etwa eine Profilschiene oder ein einfacher T-Träger sein, entsprechend kann der Roboterarm mit einem (Kugel-) Führungsschlitten oder einem Rollenschlitten ausgestattet sein. Dazu kann der Roboterarm mit einem Hubmotor ausgestattet sein, der das Heben des Roboterarms am Regal erlaubt. Ergänzend können Schleifkontakte, die auf die Stromschienen wirken, vorgesehen sein. Je nach Zweck des Roboterarms kann er mit einer oder mehreren angetrieben Achsen, beispielsweise in einer SCARA-Konfiguration und ggf. mit wenigstens einem Sensor und/oder einem speziellen Endeffektor ausgestattet sein.

Jeder Roboterarmträger, insbesondere jeder Schlitten, jeder Führungsmechanismus, jede Verstellvorrichtung kann wenigstens einen Sensor aufweisen, der beispielsweise die momentane Position, insbesondere Höhenlage des jeweiligen Roboterarms an dem Roboterarmträger, insbesondere an dem Schlitten, an dem Führungsmechanismus, an der Verstellvorrichtung erfasst. So kann jeder Roboterarm am entsprechenden angekoppelten Regallager automatisch in eine bestimmte Position bzw. Höhenlage bewegt werden. Der jeweilige Sensor kann beispielsweise eine Markierung, wie einen Strichcode, einen QR-Code oder eine sonstige Kodierung aufweisen, die durch einen optischen Aufnehmer des Sensors erfasst werden kann und der eine Information über seine jeweilige Position oder Höhenlage enthält. Statt eines optischen Markers kann beispielsweise auch ein magnetischer Marker verwendet werden. Alternativ oder ergänzend zu fest angebrachten Markern an den Regallagern d.h. an den Gestellen oder Rahmen der Regallager, können auch Sensoren, Marker und Informationsträger an Fachböden oder an einstellbaren Schalen, Tabletts oder flexibel einsetzbaren Trays angebracht sein. Diese Sensoren, Marker oder Informationsträger können dazu vorgesehen sein, ein automatisches Steuerungsprogramm zu veranlassen, auf Basis der konkreten Informationen von den Sensoren, Markern oder Informationsträgern den jeweils an das bestimmte Regallager angekoppelten Roboterarm in einer jeweiligen durch die konkrete Information bestimmte Weise anzusteuern d.h. zu bewegen.

Mögliche Anwendungen sind beispielsweise das Reinigen der Pflanzschalen, das Bestücken der Pflanzschalen mit Substrat, das Einbringen von Saatgut, das Pikieren kleiner Pflanzen und/oder das Umpflanzen auf größere Abstände, das Jäten, das Einbringen von Düngern und/oder Pflanzenschutzmitteln und/oder das Ernten. Dies alles kann mittels Sensoren oder Kameras automatisch kontrolliert bzw. überwacht werden.

Das Logistiksystem kann somit zum automatisierten Betreiben eines Gewächshauses verwendet werden. Insbesondere kann das Logistiksystem somit ein besonders effizientes vertikales Farmen ermöglichen. Gegenüber allgemeinen landwirtschaftlichen Gewächshäusern, die grundsätzlich in nur einer einzigen Pflanzebene betrieben werden und dabei zum Wachstum der Pflanzen lediglich das natürliche Sonnenlicht nutzen, sieht das vertikale Farmen die Verwendung von künstlichem Licht vor, so dass auf Grundlage der Verwendung von künstlichem Leuchtmitteln in mehreren Höhenlagen der Regallager auch Pflanzen gedeihen können, die in mehreren Ebenen übereinander positioniert sind.

Die für das vertikale Farmen bisher bekannten Technologien sind noch im Entwicklungsstadium und basieren in der Regel auf Gewächshäusern, welche auf einer oder mehreren Ebenen betrieben werden. Dabei erfolgt der Pflanzenanbau durch Aeroponik oder Hydrokultur. In Verbindung mit Beleuchtungstechnik für das Pflanzenwachstum und Belüftungssystemen gedeihen die Pflanzen bis zur Ernte innerhalb des Gebäudes bzw. im Regal der Anlage d.h. der Gewächshäuser.

In den bekannten Regalsystemen für das vertikale Farmen kann automatisierte Technik sehr ähnlich der Hochregallagertechnik für Logistikanlagen eingesetzt werden. Diese Technik, die manuelle oder automatische Regalbediengeräte umfasst, handhabt im Regal eingesetzte und austauschbare Wannen, in denen die Pflanzen gedeihen. Um die Pflanzen zu ernten, verfahren Arbeiter auf den Regalbediengeräten oder die Wannen werden mittels aufwendiger Fördertechnik an den Ernteplatz befördert.

Die Wanne kann schalenartig und/oder geschlossenwandig d.h. wasserdicht ausgebildet sein. Die Wannen enthalten den Pflanzenträger oder die Pflanzenträger. Die Wannen verbleiben im Gewächshaus, wo hingegen die Pflanzenträger aus den Wannen entfernt werden können und beispielsweise im Rahmen einer Ernte entnommen werden können. Die Pflanzenträger können beispielsweise einen festen Rahmen, insbesondere einen Aluminiumrahmen aufweisen. Der Rahmen begrenzt ein Gitter, auf dem die Pflanzen angeordnet sind. Das Gitter kann engmaschig ausgebildet sein.

Mit dem automatisierten Betreiben eines Gewächshauses wird eine Lösung geschaffen mit der die Produktion landwirtschaftlicher Nahrungsmittel in Gebäuden besonders wirtschaftlich, insbesondere unter geringem Personalbedarf mit hoher Energieeffizienz möglich wird. Insbesondere können dadurch auch Bestandsbauten, wie beispielsweise Hochhäuser oder aufgelassene Fabriken, speziell in Großstädten, einer alternativen Nutzung als Gewächshäuser umfunktioniert werden.

Die Pflanzen können insbesondere Pflanzen sein, die als Nahrungsmittel für Lebewesen dienen, also beispielsweise Gemüse, Obst, Küchenkräuter, Teepflanzen. Die Pflanzen können aber auch andere Nutzpflanzen sein, wie beispielsweise Arzneipflanzen, Kosmetikpflanzen oder Aromapflanzen.

Der sich in der Wanne befindliche Pflanzenträger bildet eine Aufnahme für das erforderliche Substrat auf dem die Pflanzen gedeihen. Gleichzeitig hat der Pflanzenträger die Funktion die in dem Substrat angepflanzten Pflanzen zu tragen. Der jeweilige Pflanzenträger kann ausgebildet sein zur Aufnahme einer einzelnen Pflanze. Alternativ kann der jeweilige Pflanzenträger ausgebildet sein zur gleichzeitigen Aufnahme mehrerer Pflanzen, insbesondere derselben Pflanzenart und/oder Pflanzensorte. Mehrere Pflanzenträger können auf derselben Ebene eines Regallagers angeordnet sein. Alternativ oder ergänzend können mehrere Pflanzenträger auf mehreren unterschiedlichen Höhenebenen eins Regallagers oder mehrerer Regallager angeordnet sein. Die mehreren Pflanzenträger können insbesondere in einer oder mehreren Wannen an einem gemeinsamen mobilen oder stationären Regallager abgelegt werden. Jede Wanne kann einen oder mehrere Pflanzenträger aufweisen.

Konkrete Ausführungsbeispiele der Erfindung sind in der nachfolgenden Beschreibung unter Bezugnahme auf die beigefügten Figuren näher erläutert.

Es zeigen:
- Fig. 1: eine schematische Darstellung eines grundlegenden erfindungsgemäßen Logistiksystems,
- Fig. 2: eine schematische Darstellung einer beispielhaften automatischen Verstellvorrichtung des Logistiksystems mit einem Antrieb am Roboterarm,
- Fig. 3: eine schematische Darstellung einer beispielhaften automatischen Verstellvorrichtung des Logistiksystems mit einem Antrieb am Regallager,
- Fig. 4: eine schematische Darstellung einer beispielhaften automatischen Verstellvorrichtung des Logistiksystems mit einem Energiespeicher am Roboterarm,
- Fig. 5: eine schematische Darstellung einer beispielhaften automatischen Verstellvorrichtung des Logistiksystems mit einer Stromschiene am Regallager,
- Fig. 6: eine schematische Darstellung eines beispielhaften fahrerlosen/autonomen Fahrzeugs mit einem Roboter als eine automatische Kopplungsmaschine und einem damit gehandhabten Roboterarm zum Ankopppeln wahlweise an das erste Regallager oder das weitere Regallager,

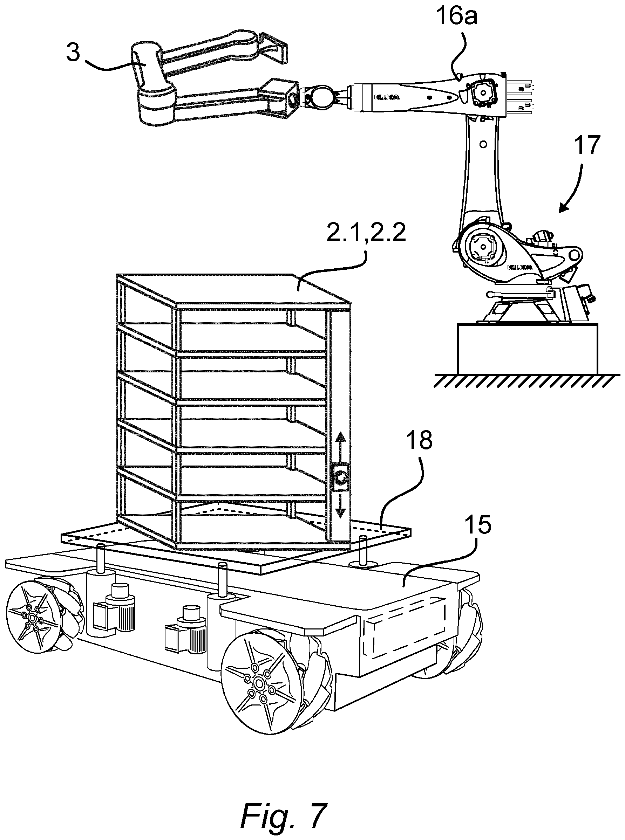

- Fig. 7: eine schematische Darstellung eines beispielhaften fahrerlosen/autonomen Fahrzeugs mit einem aufgenommenen, transportablen Regallager und einer stationären Wechselstation, und
- Fig. 8: eine schematische Darstellung eines Regallagers in der Bauart für ein vertikales Farmen.

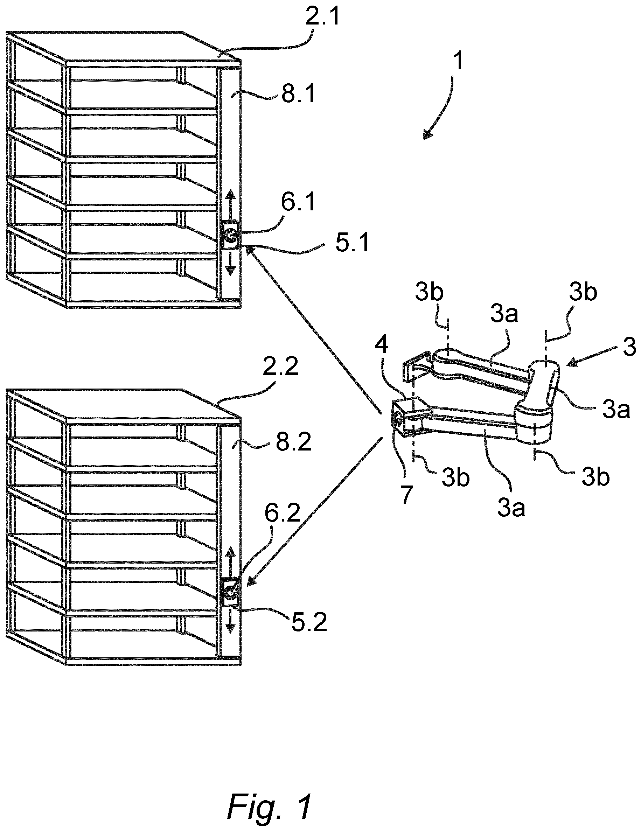

In der Fig. 1 ist ein erfindungsgemäßes Logistiksystem 1 mit seinen grundlegenden Komponenten dargestellt.

Das Logistiksystem 1 umfasst ein erstes Regallager 2.1 und wenigstens ein weiteres Regallager 2.2, sowie mindestens einen Roboterarm 3 mit mehreren Gliedern 3a und die Glieder 3a gegeneinander automatisch verstellbar verbindenden Gelenken 3b. Eines der Glieder 3a ist als ein basisbildendes Grundglied 4 des Roboterarms 3 ausgeführt. Das erste Regallager 2.1 weist einen ersten Roboterarmträger 5.1 auf, der eine erste Kopplungsvorrichtung 6.1 aufweist, welche in einem an den ersten Roboterarmträger 5.1 angekoppelten Zustand des Roboterarms 3 mit einer Gegenkopplungsvorrichtung 7 des Grundglieds 4 des Roboterarms 3 zusammenwirkt, derart, dass in einer ersten Konfiguration des Logistiksystems 1 (Fig.1 oben) das Grundglied 4 des Roboterarms 3 mit dem ersten Roboterarmträger 5.1 automatisch verriegelt und automatisch lösbar verbunden ist. Das weitere Regallager 2.2 weist in gleicher Weise einen weiteren Roboterarmträger 5.2 auf, der eine weitere Kopplungsvorrichtung 6.2 aufweist, welche in einem an den weiteren Roboterarmträger 5.2 angekoppelten Zustand des Roboterarms 3 mit der Gegenkopplungsvorrichtung 7 des Grundglieds 4 des Roboterarms 3 zusammenwirkt, derart, dass in einer von der ersten Konfiguration (Fig.1 oben) verschiedenen zweiten Konfiguration (Fig.1 unten) des Logistiksystems 1 das Grundglied 4 des Roboterarms 3 mit dem weiteren Roboterarmträger 5.2 automatisch verriegelt und automatisch lösbar verbunden ist.

Das Logistiksystem 1 umfasst im Falle des dargestellten Ausführungsbeispiels eine automatische Verstellvorrichtung 8.1, 8.2 auf, die ausgebildet ist, in der ersten Konfiguration des Logistiksystems 1, in der das Grundglied 4 des Roboterarms 3 mit dem ersten Roboterarmträger 5.1 des ersten Regallagers 2.1 gekoppelt ist, das Grundglied 4 des Roboterarms 3 relativ zum ersten Regallager 2.1 automatisch angetrieben verstellbar zu lagern, und in der zweiten Konfiguration des Logistiksystems 1, in der das Grundglied 4 des Roboterarms 3 mit dem weiteren Roboterarmträger 5.2 des weiteren Regallagers 2.2 gekoppelt ist, das Grundglied 4 des Roboterarms 3 relativ zum weiteren Regallager 2.2 automatisch angetrieben verstellbar zu lagern.

Die automatische Verstellvorrichtung 8.1, 8.2 kann ausgebildet sein, das Grundglied 4 des Roboterarms 3 in der ersten Konfiguration des Logistiksystems 1 linear höhenverstellbar an dem ersten Regallager 2.1 automatisch angetrieben verstellbar zu lagern und in der zweiten Konfiguration des Logistiksystems 1 linear höhenverstellbar an dem weiteren Regallager 2.2 automatisch angetrieben verstellbar zu lagern.

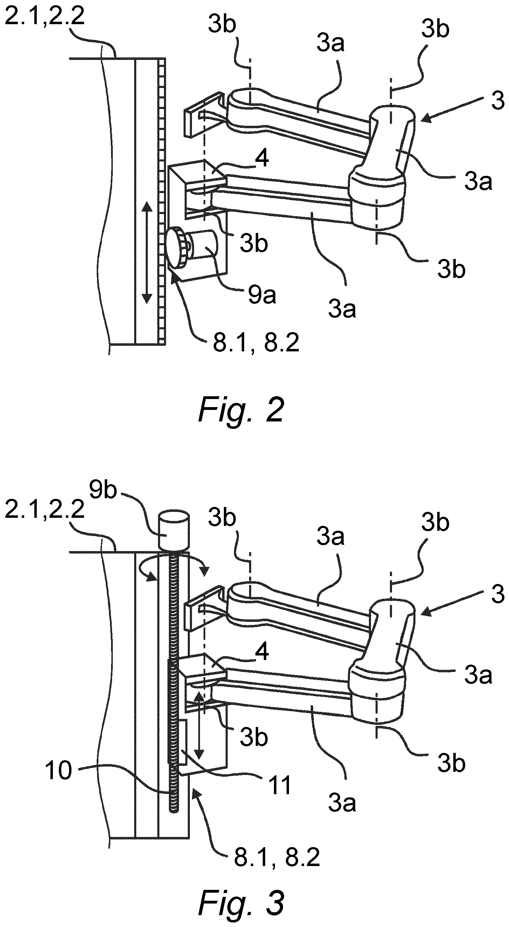

In einer ersten Ausführungsvariante gemäß Fig. 2 kann die automatische Verstellvorrichtung 8.1, 8.2 einen Antrieb 9a aufweisen, der ausgebildet ist, bei seiner Aktivierung das Grundglied 4 des Roboterarms 3 in der ersten Konfiguration relativ zum ersten Regallager 2.1 automatisch angetrieben zu bewegen und in der zweiten Konfiguration relativ zum weiteren Regallager 2.2 automatisch angetrieben zu bewegen, wobei der Antrieb 9a als ein Teil des Roboterarms 3 ausgebildet ist, der in einem vom ersten Regallager 2.1 und/oder vom weiteren Regallager 2.2 abgekoppelten Zustand zusammen mit dem Roboterarm 3 vom ersten Regallager 2.1 und/oder vom weiteren Regallager 2.2 abgekoppelt ist.

In einer zweiten Ausführungsvariante gemäß Fig. 3 kann die automatische Verstellvorrichtung 8.1, 8.2 einen Antrieb 9b aufweisen, der ausgebildet ist, bei seiner Aktivierung das Grundglied 4 des Roboterarms 3 in der ersten Konfiguration relativ zum ersten Regallager 2.1 automatisch angetrieben zu bewegen und in der zweiten Konfiguration relativ zum weiteren Regallager 2.2 automatisch angetrieben zu bewegen, wobei der Antrieb 9b jeweils als ein Teil des ersten Regallagers 2.1 und als ein Teil des weiteren Regallagers 2.2 ausgebildet ist. Dabei kann jedem Antrieb 9b beispielsweise eine Hubspindel 11 zugeordnet sein, d.h. je erstem Regallager 2.1 und weiterem Regallager 2.2 ist eine Hubspindel 11 vorgesehen, welche durch den Antrieb 9b angetrieben wird. Auf der Hubspindel 11 sitzt eine höhenverstellbare Spindelmutter 12, die mit dem Grundglied 4 des Roboterarms 3 verbunden ist.

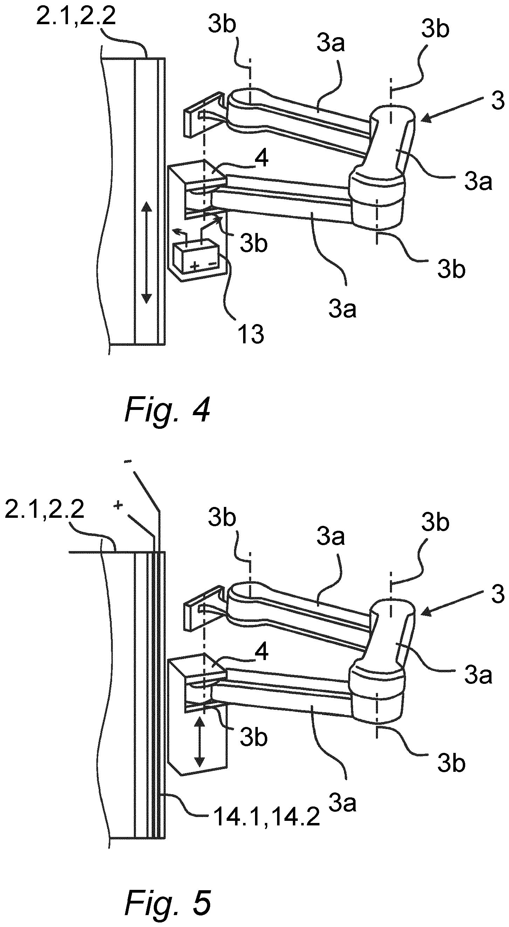

In der Ausführungsvariante gemäß Fig. 4 weist der Roboterarm 3 einen Energiespeicher 13 auf, der ausgebildet ist, den Antrieb 9a und/oder wenigstens einen, jeweils einem Gelenk 3b des Roboterarms 3 zugeordneten Gelenksmotor des Roboterarms 3 unabhängig von der jeweiligen Konfiguration des Logistiksystems 1 mit Antriebsenergie zu versorgen.

In der Ausführungsvariante gemäß Fig. 5 weist das erste Regallager 2.1 wenigstens eine erste Stromschiene 14.1 auf, die ausgebildet ist, elektrische Energie über das erste Regallager 2.1 an den Roboterarm 3 zuzuführen, wenn in der ersten Konfiguration der Roboterarm 3 mittels der ersten Kopplungsvorrichtung 5.1 an das erste Regallager 2.1 angekoppelt ist. Auch das weitere Regallager 2.2 kann wenigstens eine weitere Stromschiene 14.2 aufweisen, die ausgebildet ist, elektrische Energie über das weitere Regallager 2.2 an den Roboterarm 3 zuzuführen, wenn in der zweiten Konfiguration der Roboterarm 3 mittels der weiteren Kopplungsvorrichtung 5.2 an das weitere Regallager 2.2 angekoppelt ist.

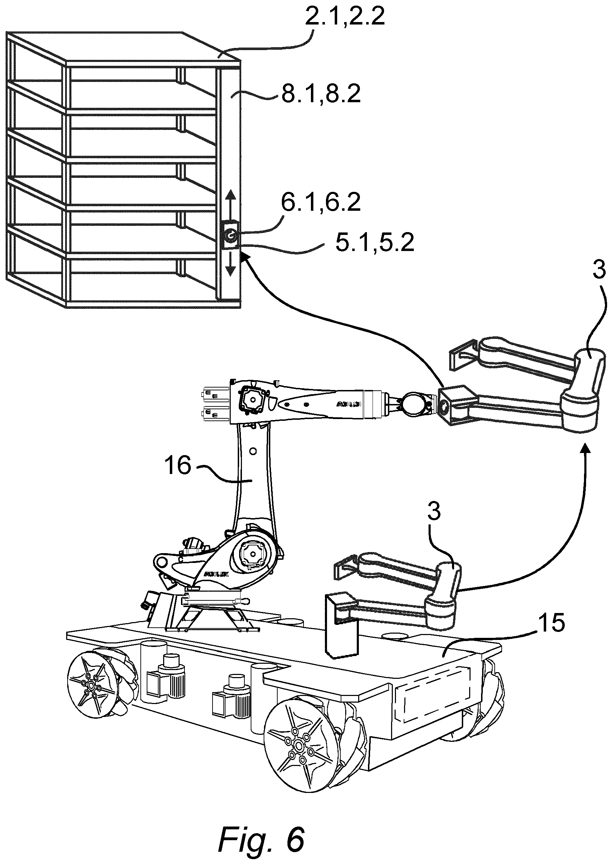

In einer Ausführung gemäß Fig. 6 kann das Logistiksystem 1 wenigstens ein fahrerloses und/oder autonomes Fahrzeug 15 aufweisen, das eine automatische Kopplungsmaschine 16, beispielsweise in Art eines Roboters aufweist, die ausgebildet, den vom wenigstens einen Fahrzeug 15 in eine räumliche Nähe an das erste Regallager 2.1 herantransportierten Roboterarm 3 automatisch an die erste Kopplungsvorrichtung 5.1 des ersten Regallagers 2.1 anzukoppeln, wenn das Logistiksystem 1 in die erste Konfiguration gebracht werden soll, und die automatische Kopplungsmaschine 16 ausgebildet ist, den vom wenigstens einen Fahrzeug 15 in eine räumliche Nähe an das weitere Regallager 2.2 herantransportierten Roboterarm 3 automatisch an die weitere Kopplungsvorrichtung 5.2 des weiteren Regallagers 2.2 anzukoppeln, wenn das Logistiksystem 1 in die zweite Konfiguration gebracht werden soll.

In einer abgewandelten Ausführungsform kann das Logistiksystem 1 eine stationäre Wechselstation 17 und wenigstens ein fahrerloses und/oder autonomes Fahrzeug 15 aufweisen, das ausgebildet ist, wahlweise das erste Regallager 2.1 oder das weitere Regallager 2.2 durch Fahren des wenigstens einen Fahrzeugs 15 transportabel aufzunehmen, beispielsweise mittels einer Hubplattform 18, wobei die stationäre Wechselstation 17 eine automatische Kopplungsmaschine 16a aufweist, die ausgebildet, den Roboterarm 3 an das vom wenigstens einen Fahrzeug 15 in eine räumliche Nähe der stationären Wechselstation 17 herantransportierte erste Regallager 2.1 automatisch anzukoppeln oder von diesem abzukoppeln, wenn das Logistiksystem 1 zwischen der ersten Konfiguration und der zweiten Konfiguration gewechselt werden soll, oder den Roboterarm 3 an das vom wenigstens einen Fahrzeug 15 in eine räumliche Nähe der stationären Wechselstation 17 herantransportierte weitere Regallager 2.2 automatisch anzukoppeln oder von diesem abzukoppeln, wenn das Logistiksystem 1 zwischen der ersten Konfiguration und der zweiten Konfiguration gewechselt werden soll.

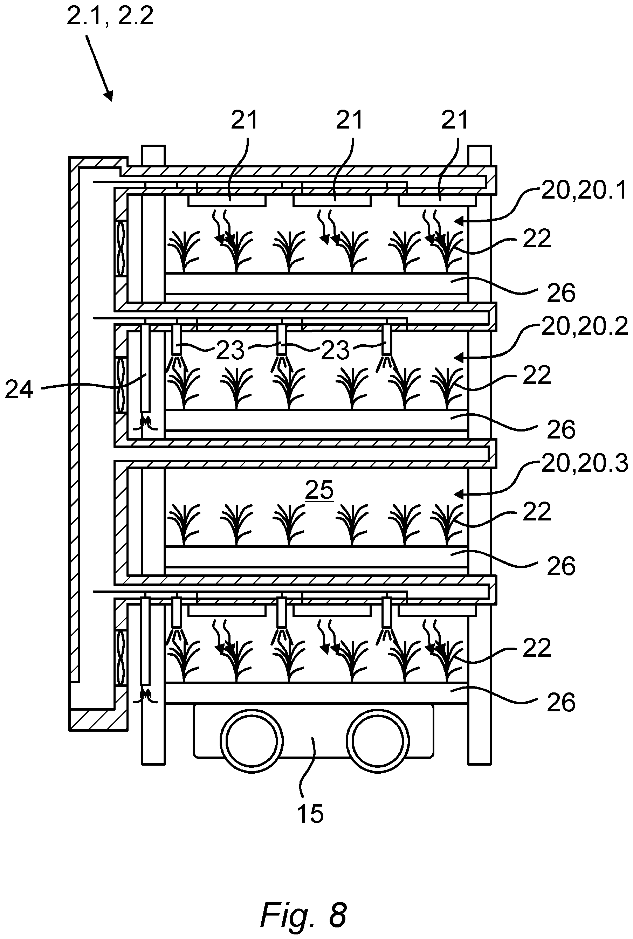

Das erste Regallager 2.1 und jedes weitere Regallager 2.2 können, wie dies in Fig. 8 schematisch aufgezeigt ist, jeweils mehrere Aufnahmeebenen 20 für Pflanzen aufweisen, wobei die jeweils mehreren Aufnahmeebenen 20 Gruppen bilden von ersten Aufnahmeebenen 20.1, die Beleuchtungseinrichtungen 21 für Pflanzen 22 aufweisen, von zweiten Aufnahmeebenen 20.2, die Wasserversorgungseinrichtungen 23 oder Nährstofflösungsversorgungseinrichtungen 24 für Pflanzen aufweisen und/oder von dritten Aufnahmeebenen 20.3, die Zwischenlagerplätze für Pflanzenträger 20 aufweisen, wobei der Roboterarm 3 ausgebildet und eingerichtet ist, Pflanzen 22 oder Pflanzenträger 20 automatisch zwischen den ersten Aufnahmeebenen 20.1, den zweiten Aufnahmeebenen 20.2 und den dritten Aufnahmeebenen 20.3 innerhalb eines ersten Regallagers 2.1 oder eines weiteren Regallagers 2.2 umzusetzen, wenn der Roboterarm 3 an dem jeweiligen ersten Regallager 2.1 oder weiteren Regallager 2.2 automatisch angekoppelt ist.

## Patentansprüche

1. Logistiksystem, aufweisend ein erstes Regallager (2.1) und wenigstens ein weiteres Regallager (2.2), sowie mindestens einen Roboterarm (3) mit mehreren Gliedern (3a) und die Glieder (3a) gegeneinander automatisch verstellbar verbindenden Gelenken (3b), wobei eines der Glieder (3a) ein basisbildendes Grundglied (4) des Roboterarms (3) ist, wobei
das erste Regallager (2.1) einen ersten Roboterarmträger (5.1) aufweist, der eine erste Kopplungsvorrichtung (6.1) aufweist, welche in einem an den ersten Roboterarmträger (5.1) angekoppelten Zustand des Roboterarms (3) mit einer Gegenkopplungsvorrichtung (7) des Grundglieds (4) des Roboterarms (3) zusammenwirkt,
und das weitere Regallager (2.2) einen weiteren Roboterarmträger (5.2) aufweist, der eine weitere Kopplungsvorrichtung (6.2) aufweist, welche in einem an den weiteren Roboterarmträger (5.2) angekoppelten Zustand des Roboterarms (3) mit der Gegenkopplungsvorrichtung (7) des Grundglieds (4) des Roboterarms (3) zusammenwirkt, **dadurch gekennzeichnet, dass** in einer ersten Konfiguration des Logistiksystems (1) das Grundglied (4) des Roboterarms (3) mit dem ersten Roboterarmträger (5.1) automatisch verriegelt und automatisch lösbar verbunden ist und dass
in einer von der ersten Konfiguration verschiedenen zweiten Konfiguration des Logistiksystems (1) das Grundglied (4) des Roboterarms (3) mit dem weiteren Roboterarmträger (5.2) automatisch verriegelt und automatisch lösbar verbunden ist.

2. Logistiksystem nach Anspruch 1, **gekennzeichnet durch** eine automatische Verstellvorrichtung (8.1, 8.2), die ausgebildet ist, in der ersten Konfiguration des Logistiksystems (1), in der das Grundglied (4) des Roboterarms (3) mit dem ersten Roboterarmträger (5.2) des ersten Regallagers (2.1) gekoppelt ist, das Grundglied (4) des Roboterarms (3) relativ zum ersten Regallager (2.1) automatisch angetrieben verstellbar zu lagern, und in der zweiten Konfiguration des Logistiksystems (1), in der das Grundglied (4) des Roboterarms (3) mit dem weiteren Roboterarmträger (5.2) des weiteren Regallagers (2.2) gekoppelt ist, das Grundglied (4) des Roboterarms (3) relativ zum weiteren Regallager (2.2) automatisch angetrieben verstellbar zu lagern.

3. Logistiksystem nach Anspruch 2, **dadurch gekennzeichnet, dass** die automatische Verstellvorrichtung (8.1, 8.2) ausgebildet ist, das Grundglied (4) des Roboterarms (3) in der ersten Konfiguration des Logistiksystems (1) linear höhenverstellbar an dem ersten Regallager (2.1) automatisch angetrieben verstellbar zu lagern und in der zweiten Konfiguration des Logistiksystems (1) linear höhenverstellbar an dem weiteren Regallager (2.2) automatisch angetrieben verstellbar zu lagern.

4. Logistiksystem nach Anspruch 2 oder 3, **dadurch gekennzeichnet, dass** die automatische Verstellvorrichtung (8.1, 8.2) einen Antrieb (9a) aufweist, der ausgebildet ist, bei seiner Aktivierung das Grundglied (4) des Roboterarms (3) in der ersten Konfiguration relativ zum ersten Regallager (2.1) automatisch angetrieben zu bewegen und in der zweiten Konfiguration relativ zum weiteren Regallager (2.2) automatisch angetrieben zu bewegen, wobei der Antrieb (9a) als ein Teil des Roboterarms (3) ausgebildet ist, der in einem vom ersten Regallager (2.1) und/oder vom weiteren Regallager (2.2) abgekoppelten Zustand zusammen mit dem Roboterarm (3) vom ersten Regallager (2.1) und/oder vom weiteren Regallager (2.2) abgekoppelt ist.

5. Logistiksystem nach einen der Ansprüche 1 bis 4, **dadurch gekennzeichnet, dass** der Roboterarm (3) einen Energiespeicher (13) aufweist, der ausgebildet ist, den Antrieb (9a) und/oder wenigstens einen, jeweils einem Gelenk (3b) des Roboterarms (3) zugeordneten Gelenksmotor des Roboterarms (3) unabhängig von der jeweiligen Konfiguration des Logistiksystems (1) mit Antriebsenergie zu versorgen.

6. Logistiksystem nach einen der Ansprüche 1 bis 5, **dadurch gekennzeichnet, dass** das erste Regallager (2.1) wenigstens eine erste Stromschiene (14.1) aufweist, die ausgebildet ist, elektrische Energie über das erste Regallager (2.1) an den Roboterarm (3) zuzuführen, wenn in der ersten Konfiguration der Roboterarm (3) mittels der ersten Kopplungsvorrichtung (5.1) an das erste Regallager (2.1) angekoppelt ist und das weitere Regallager (2.2) wenigstens eine weitere Stromschiene (14.2) aufweist, die ausgebildet ist, elektrische Energie über das weitere Regallager (2.2) an den Roboterarm (3) zuzuführen, wenn in der zweiten Konfiguration der Roboterarm (3) mittels der weiteren Kopplungsvorrichtung (5.2) an das weitere Regallager (2.2) angekoppelt ist.

7. Logistiksystem nach einen der Ansprüche 1 bis 6, aufweisend wenigstens ein Fahrzeug (15), insbesondere ein fahrerloses und/oder autonomes Fahrzeug (15), das eine automatische Kopplungsmaschine (16) aufweist, die ausgebildet, den vom wenigstens einen Fahrzeug (15) in eine räumliche Nähe an das erste Regallager (2.1) herantransportierten Roboterarm (3) automatisch an die erste Kopplungsvorrichtung (5.1) des ersten Regallagers (2.1) anzukoppeln, wenn das Logistiksystem (1) in die erste Konfiguration gebracht werden soll, und die automatische Kopplungsmaschine (16) ausgebildet ist, den vom wenigstens einen Fahrzeug (15) in eine räumliche Nähe an das weitere Regallager (2.2) herantransportierten Roboterarm (3) automatisch an die weitere Kopplungsvorrichtung (5.2) des weiteren Regallagers (2.2) anzukoppeln, wenn das Logistiksystem (1) in die zweite Konfiguration gebracht werden soll.

8. Logistiksystem nach einen der Ansprüche 1 bis 6, aufweisend eine stationäre Wechselstation (17) und wenigstens ein Fahrzeug (15), insbesondere ein fahrerloses und/oder autonomes Fahrzeug (15), das ausgebildet ist, wahlweise das erste Regallager (2.1) oder das weitere Regallager (2.2) durch Fahren des wenigstens einen Fahrzeugs (15) transportabel aufzunehmen, wobei die stationäre Wechselstation (17) eine automatische Kopplungsmaschine (16a) aufweist, die ausgebildet, den Roboterarm (3) an das vom wenigstens einen Fahrzeug (15) in eine räumliche Nähe der stationären Wechselstation (17) herantransportierte erste Regallager (2.1) automatisch anzukoppeln oder von diesem abzukoppeln, wenn das Logistiksystem (1) zwischen der ersten Konfiguration und der zweiten Konfiguration gewechselt werden soll, oder den Roboterarm (3) an das vom wenigstens einen Fahrzeug (15) in eine räumliche Nähe der stationären Wechselstation (17) herantransportierte weitere Regallager (2.2) automatisch anzukoppeln oder von diesem abzukoppeln, wenn das Logistiksystem (1) zwischen der ersten Konfiguration und der zweiten Konfiguration gewechselt werden soll.

9. Logistiksystem nach einen der Ansprüche 1 bis 8, **dadurch gekennzeichnet, dass** das erste Regallager (2.1), jedes weitere Regallager (2.2), das wenigstens eine Fahrzeug (15), insbesondere fahrerlose und/oder autonome Fahrzeug (15), der Roboterarm (3) und/oder die stationäre Wechselstation (17) wenigstens eine Sensoreinrichtung aufweist, die ausgebildet ist, die momentane relative Position und/oder relative Lage des Roboterarms (3) bezüglich des ersten Regallagers (2.1), jedes weiteren Regallagers (2.2), des wenigstens einen Fahrzeugs (15), insbesondere fahrerlosen und/oder autonomen Fahrzeugs (15) und/oder der stationären Wechselstation (17) automatisch zu bestimmen.

10. Logistiksystem nach einem der Ansprüche 1 bis 9, **dadurch gekennzeichnet, dass** das erste Regallager (2.1) und jedes weitere Regallager (2.2) jeweils mehrere Aufnahmeebenen (20) für Pflanzen (22) aufweist, wobei die jeweils mehreren Aufnahmeebenen (20) Gruppen bilden von ersten Aufnahmeebenen (20.1), die Beleuchtungseinrichtungen (21) für Pflanzen (22) aufweisen, von zweiten Aufnahmeebenen (20.2), die Wasserversorgungseinrichtungen (23) oder Nährstofflösungsversorgungseinrichtungen (24) für Pflanzen (22) aufweisen und/oder von dritten Aufnahmeebenen (20.3), die Zwischenlagerplätze (25) für Pflanzenträger (26) aufweisen, wobei der Roboterarm (3) ausgebildet und eingerichtet ist, Pflanzen (22) oder Pflanzenträger (26) automatisch zwischen den ersten Aufnahmeebenen (20.1), den zweiten Aufnahmeebenen (20.2) und den dritten Aufnahmeebenen (20.3) innerhalb eines ersten Regallagers (2.1) oder eines weiteren Regallagers (2.2) umzusetzen, wenn der Roboterarm (3) an dem jeweiligen ersten Regallager (2.1) oder weiteren Regallager (2.2) automatisch angekoppelt ist.

## Claims

1. Logistics system comprising a first rack store (2.1) and at least one further rack store (2.2), as well as at least one robot arm (3) having a plurality of links (3a) and joints (3b) that connect the links (3a) such that they can be automatically adjusted with respect to one another, wherein one of the links (3a) is a base-forming base link (4) of the robot arm (3), wherein the first rack store (2.1) has a first robot arm carrier (5.1) having a first coupling device (6.1) which, when the robot arm (3) is coupled to the first robot arm carrier (5.1), interacts with a counter-coupling device (7) of the base link (4) of the robot arm (3), and the further rack store (2.2) has a further robot arm carrier (5.2) having a further coupling device (6.2) which, when the robot arm (3) is coupled to the further robot arm carrier (5.2), interacts with the counter-coupling device (7) of the base link (4) of the robot arm (3), **characterized in that**, in a first configuration of the logistics system (1), the base link (4) of the robot arm (3) is connected to the first robot arm carrier (5.1) in an automatically locked and automatically releasable manner, and **in that**, in a second configuration of the logistics system (1) that differs from the first configuration, the base link (4) of the robot arm (3) is connected to the further robot arm carrier (5.2) in an automatically locked and automatically releasable manner.

2. Logistics system according to Claim 1, **characterized by** an automatic adjustment device (8.1, 8.2) which is designed, in the first configuration of the logistics system (1) in which the base link (4) of the robot arm (3) is coupled to the first robot arm carrier (5.2) of the first rack store (2.1), to mount the base link (4) of the robot arm (3) so as to be adjustable in an automatically driven manner relative to the first rack store (2.1), and, in the second configuration of the logistics system (1) in which the base link (4) of the robot arm (3) is coupled to the further robot arm carrier (5.2) of the further rack store (2.2), to mount the base link (4) of the robot arm (3) so as to be adjustable in an automatically driven manner relative to the further rack store (2.2).

3. Logistics system according to Claim 2, **characterized in that** the automatic adjustment device (8.1, 8.2) is designed, in the first configuration of the logistics system (1), to mount the base link (4) of the robot arm (3) on the first rack store (2.1) in a linearly height-adjustable manner so as to be adjustable in an automatically driven manner, and, in the second configuration of the logistics system (1), to mount it on the further rack store (2.2) in a linearly height-adjustable manner so as to be adjustable in an automatically driven manner.

4. Logistics system according to Claim 2 or 3, **characterized in that** the automatic adjustment device (8.1, 8.2) has a drive (9a) which is designed, when activated, to move the base link (4) of the robot arm (3) relative to the first rack store (2.1) in an automatically driven manner in the first configuration and to move it relative to the further rack store (2.2) in an automatically driven manner in the second configuration, wherein the drive (9a) is formed as a part of the robot arm (3) which, together with the robot arm (3), is uncoupled from the first rack store (2.1) and/or from the further rack store (2.2) in a state uncoupled from the first rack store (2.1) and/or from the further rack store (2.2).

5. Logistics system according to one of Claims 1 to 4, **characterized in that** the robot arm (3) has an energy store (13) which is designed to supply the drive (9a) and/or at least one joint motor of the robot arm (3), which is respectively assigned to a joint (3b) of the robot arm (3), with drive energy independently of the respective configuration of the logistics system (1).

6. Logistics system according to one of Claims 1 to 5, **characterized in that** the first rack store (2.1) has at least one first busbar (14.1) which is designed to supply electrical energy to the robot arm (3) via the first rack store (2.1) if, in the first configuration, the robot arm (3) is coupled to the first rack store (2.1) by means of the first coupling device (5.1), and the further rack store (2.2) has at least one further busbar (14.2) which is designed to supply electrical energy to the robot arm (3) via the further rack store (2.2) if, in the second configuration, the robot arm (3) is coupled to the further rack store (2.2) by means of the further coupling device (5.2).

7. Logistics system according to one of Claims 1 to 6, comprising at least one vehicle (15), in particular a driverless and/or autonomous vehicle (15), which has an automatic coupling machine (16) which is designed to automatically couple the robot arm (3), which is transported by the at least one vehicle (15) into a spatial proximity of the first rack store (2.1), to the first coupling device (5.1) of the first rack store (2.1) if the logistics system (1) is intended to be brought into the first configuration, and the automatic coupling machine (16) is designed to automatically couple the robot arm (3), which is transported by the at least one vehicle (15) into a spatial proximity of the further rack store (2.2), to the further coupling device (5.2) of the further rack store (2.2) if the logistics system (1) is intended to be brought into the second configuration.

8. Logistics system according to one of Claims 1 to 6, comprising a stationary changing station (17) and at least one vehicle (15), in particular a driverless and/or autonomous vehicle (15), which is designed to selectively receive the first rack store (2.1) or the further rack store (2.2) in a transportable manner by movement of the at least one vehicle (15), wherein the stationary changing station (17) has an automatic coupling machine (16a) which is designed to automatically couple the robot arm (3) to first rack store (2.1) transported by the at least one vehicle (15) into a spatial proximity of the stationary changing station (17) or to uncouple it from this if the logistics system (1) is intended to be changed between the first configuration and the second configuration, or to automatically couple the robot arm (3) to the further rack store (2.2) transported by the at least one vehicle (15) into a spatial proximity of the stationary changing station (17) or to uncouple it from this if the logistics system (1) is intended to be changed between the first configuration and the second configuration.

9. Logistics system according to one of Claims 1 to 8, **characterized in that** the first rack store (2.1), each further rack store (2.2), the at least one vehicle (15), in particular driverless and/or autonomous vehicle (15), the robot arm (3) and/or the stationary changing station (17) has/have at least one sensor apparatus which is designed to automatically determine the instantaneous relative position and/or relative bearing of the robot arm (3) with respect to the first rack store (2.1), each further rack store (2.2), the at least one vehicle (15), in particular driverless and/or autonomous vehicle (15), and/or the stationary changing station (17).

10. Logistics system according to one of Claims 1 to 9, **characterized in that** the first rack store (2.1) and each further rack store (2.2) each have a plurality of receiving levels (20) for plants (22), wherein the plurality of receiving levels (20) in each case form groups of first receiving levels (20.1) having lighting apparatuses (21) for plants (22), groups of second receiving levels (20.2) having water supply apparatuses (23) or nutrient solution supply apparatuses (24) for plants (22), and/or groups of third receiving levels (20.3) having intermediate storage locations (25) for plant carriers (26), wherein the robot arm (3) is designed and configured to automatically relocate plants (22) or plant carriers (26) between the first receiving levels (20.1), the second receiving levels (20.2) and the third receiving levels (20.3) within a first rack store (2.1) or a further rack store (2.2) if the robot arm (3) is automatically coupled to the respective first rack store (2.1) or further rack store (2.2).

## Revendications

1. Système logistique, présentant un premier rayonnage (2.1) et au moins un autre rayonnage (2.2), ainsi qu'au moins un bras de robot (3) pourvu de plusieurs membres (3a) et d'articulations (3b) reliant les membres (3a) de manière automatiquement réglable les uns par rapport aux autres, dans lequel l'un des membres (3a) est un membre de base (4) formant base du bras de robot (3), dans lequel le premier rayonnage (2.1) présente un premier support de bras de robot (5.1) qui présente un premier dispositif d'accouplement (6.1) qui, dans un état où le bras de robot (3) est accouplé au premier support de bras de robot (5.1), coopère avec un dispositif d'accouplement homologue (7) du membre de base (4) du bras de robot (3), et l'autre rayonnage (2.2) présente un autre support de bras de robot (5.2) qui présente un autre dispositif d'accouplement (6.2) qui, dans un état où le bras de robot (3) est accouplé à l'autre support de bras de robot (5.2), coopère avec le dispositif d'accouplement homologue (7) du membre de base (4) du bras de robot (3), **caractérisé en ce que** dans une première configuration du système logistique (1), le membre de base (4) du bras de robot (3) est relié au premier support de bras de robot (5.1) de manière automatiquement verrouillée et automatiquement amovible, et **en ce que** dans une deuxième configuration différente de la première configuration du système logistique (1), le membre de base (4) du bras de robot (3) est relié à l'autre support de bras de robot (5.2) de manière automatiquement verrouillée et automatiquement amovible.

2. Système logistique selon la revendication 1, **caractérisé par** un dispositif de réglage automatique (8.1, 8.2) qui est réalisé, dans la première configuration du système logistique (1) dans laquelle le membre de base (4) du bras de robot (3) est accouplé au premier support de bras de robot (5.2) du premier rayonnage (2.1), pour loger le membre de base (4) du bras de robot (3) par rapport au premier rayonnage (2.1) de manière réglable et entraînée automatiquement, et dans la deuxième configuration du système logistique (1) dans laquelle le membre de base (4) du bras de robot (3) est accouplé à l'autre support de bras de robot (5.2) de l'autre rayonnage (2.2), pour loger le membre de base (4) du bras de robot (3) par rapport à l'autre rayonnage (2.2) de manière réglable et entraînée automatiquement.

3. Système logistique selon la revendication 2, **caractérisé en ce que** le dispositif de réglage automatique (8.1, 8.2) est réalisé pour loger le membre de base (4) du bras de robot (3) dans la première configuration du système logistique (1) avec un réglage linéaire de la hauteur au niveau du premier rayonnage (2.1) de manière réglable et entraînée automatiquement, et pour le loger dans la deuxième configuration du système logistique (1) avec un réglage linéaire de la hauteur au niveau de l'autre rayonnage (2.2) de manière réglable et entraînée automatiquement.

4. Système logistique selon la revendication 2 ou 3, **caractérisé en ce que** le dispositif de réglage automatique (8.1, 8.2) présente un dispositif d'entraînement (9a) qui, lorsqu'il est activé, est réalisé pour déplacer de manière entraînée automatiquement le membre de base (4) du bras de robot (3) dans la première configuration par rapport au premier rayonnage (2.1) et pour le déplacer de manière entraînée automatiquement dans la deuxième configuration par rapport à l'autre rayonnage (2.2), dans lequel le dispositif d'entraînement (9a) est réalisé comme une partie du bras de robot (3) qui, dans un état découplé du premier rayonnage (2.1) et/ou de l'autre rayonnage (2.2) est découplé conjointement avec le bras de robot (3) du premier rayonnage (2.1) et/ou de l'autre rayonnage (2.2).

5. Système logistique selon l'une quelconque des revendications 1 à 4, **caractérisé en ce que** le bras de robot (3) présente un accumulateur d'énergie (13) qui est réalisé pour alimenter en énergie d'entraînement le dispositif d'entraînement (9a) et/ou au moins un moteur d'articulation du bras de robot (3), associé respectivement à une articulation (3b) du bras de robot (3), indépendamment de la configuration respective du système logistique (1).

6. Système logistique selon l'une quelconque des revendications 1 à 5, **caractérisé en ce que** le premier rayonnage (2.1) présente au moins un premier rail conducteur (14.1) qui est réalisé pour acheminer de l'énergie électrique au bras de robot (3) par l'intermédiaire du premier rayonnage (2.1) si dans la première configuration, le bras de robot (3) est accouplé au premier rayonnage (2.1) au moyen du premier dispositif d'accouplement (5.1), et l'autre rayonnage (2.2) présente au moins un autre rail conducteur (14.2) qui est réalisé pour acheminer de l'énergie électrique au bras de robot (3) par l'intermédiaire de l'autre rayonnage (2.2) si dans la deuxième configuration, le bras de robot (3) est accouplé à l'autre rayonnage (2.2) au moyen de l'autre dispositif d'accouplement (5.2).

7. Système logistique selon l'une quelconque des revendications 1 à 6, présentant au moins un véhicule (15), en particulier un véhicule (15) sans conducteur et/ou autonome, qui présente une machine d'accouplement automatique (16) qui est réalisée pour accoupler le bras de robot (3) rapproché par ledit au moins un véhicule (15) à proximité spatiale du premier rayonnage (2.1) automatiquement au premier dispositif d'accouplement (5.1) du premier rayonnage (2.1) lorsque le système logistique (1) doit être amené dans la première configuration, et la machine d'accouplement automatique (16) est réalisée pour accoupler le bras de robot (3) rapproché par ledit au moins un véhicule (15) à proximité spatiale de l'autre rayonnage (2.2) automatiquement à l'autre dispositif d'accouplement (5.2) de l'autre rayonnage (2.2) lorsque le système logistique (1) doit être amené dans la deuxième configuration.

8. Système logistique selon l'une quelconque des revendications 1 à 6, présentant une station de changement stationnaire (17) et au moins un véhicule (15), en particulier un véhicule (15) sans conducteur et/ou autonome, qui est réalisé pour recevoir de manière transportable sélectivement le premier rayonnage (2.1) ou l'autre rayonnage (2.2) en déplaçant ledit au moins un véhicule (15), dans lequel la station de changement stationnaire (17) présente une machine d'accouplement automatique (16a) qui est réalisée pour accoupler automatiquement le bras de robot (3) au premier rayonnage (2.1) rapproché par ledit au moins un véhicule (15) à proximité spatiale de la station de changement stationnaire (17) ou pour le découpler de celui-ci lorsque le système logistique (1) doit changer entre la première configuration et la deuxième configuration, ou pour accoupler automatiquement le bras de robot (3) à l'autre rayonnage (2.2) rapproché par ledit au moins un véhicule (15) à proximité spatiale de la station de changement stationnaire (17) ou pour le découpler de celui-ci lorsque le système logistique (1) doit changer entre la première configuration et la deuxième configuration.

9. Système logistique selon l'une quelconque des revendications 1 à 8, **caractérisé en ce que** le premier rayonnage (2.1), chaque autre rayonnage (2.2), ledit au moins un véhicule (15), en particulier un véhicule (15) sans conducteur et/ou autonome, le bras de robot (3) et/ou la station de changement stationnaire (17) présentent au moins un dispositif capteur qui est réalisé pour déterminer automatiquement la position relative instantanée et/ou la posture relative du bras de robot (3) par rapport au premier rayonnage (2.1), à chaque autre rayonnage (2.2), audit au moins un véhicule (15), en particulier à un véhicule (15) sans conducteur et/ou autonome, et/ou à la station de changement stationnaire (17).

10. Système logistique selon l'une quelconque des revendications 1 à 9, **caractérisé en ce que** le premier rayonnage (2.1) et chaque autre rayonnage (2.2) présentent respectivement plusieurs niveaux de réception (20) pour des plantes (22), dans lequel les respectivement plusieurs niveaux de réception (20) constituent des groupes de premiers niveaux de réception (20.1) qui présentent des dispositifs d'éclairage (21) pour des plantes (22), de deuxièmes niveaux de réception (20.2) qui présentent des dispositifs d'alimentation en eau (23) ou des dispositifs d'alimentation en solution nutritionnelle (24) pour des plantes (22) et/ou de troisièmes niveaux de réception (20.3) qui présentent des emplacements de stockage intermédiaire (25) pour des supports de plante (26), dans lequel le bras de robot (3) est réalisé et conçu pour transposer des plantes (22) ou des supports de plante (26) automatiquement entre les premiers niveaux de réception (20.1), les deuxièmes niveaux de réception (20.2) et les troisièmes niveaux de réception (20.3) à l'intérieur d'un premier rayonnage (2.1) ou d'un autre rayonnage (2.2) lorsque le bras de robot (3) est accouplé automatiquement au premier rayonnage (2.1) respectif ou à l'autre rayonnage (2.2).
